# EUROPEAN PATENT APPLICATION

(11) **EP 4 502 071 A1**
(43) Date of publication of application: **05.02.2025**
(21) Application number: 23774867.8
(22) Date of filing: 20.03.2023
(51) Int. Cl.: C08L 101/00, B32B 27/30, C08K 5/10, C08K 5/103, C08L 91/06, C09D 5/02, C09D 7/63, C09D 7/65, C09D 201/00, C09K 3/18, D21H 19/20, D21H 19/22

(54) **AQUEOUS DISPERSION, AND FILM AND LAMINATE FORMED USING SAME**

(30) Priority: 24.03.2022 JP 2022048748
(71) Applicant: Mitsubishi Chemical Corporation, Tokyo 100-8251 (JP)
(72) Inventor: ISHII, Taku, Tokyo 100-8251 (JP); NAKAMURA, Takeshi, Tokyo 100-8251 (JP)
(74) Representative: Vossius & Partner Patentanwälte Rechtsanwälte mbB
(86) International application number: PCT/JP2023/010889
(87) International publication number: WO 2023/182272

(57) **Abstract**

An aqueous dispersion containing a binder resin (A), a nonionic surfactant (B), and a wax component (C), wherein the content of the nonionic surfactant (B) is 0.1 to 200 parts by mass based on 100 parts by mass of the binder resin (A), and 2 parts by mass or more based on 100 parts by mass of the wax component (C).

## Description

### Technical Field

The present invention relates to an aqueous dispersion useful as a water-and oil-resistant coating agent or a heat-sealable coating agent. More specifically, the present invention relates to an aqueous dispersion that has low viscosity, excellent storage stability and workability, and is capable of imparting water-and oil-resistant properties and a heat-sealable property to a substrate when used as a coating agent.

The present invention also relates to a water- and oil-resistant coating agent and a heat-sealable coating agent made of the aqueous dispersion, and a film and a laminated body using the aqueous dispersion.

### Background Art

Packaging materials for foods, such as snacks and fried foods, are conventionally pulp substrates such as paper or plastic substrates that are rendered resistant to water and oil by the application of a coating agent. A fluorine compound or paraffin wax has been used for the coating agent. In addition to the water-and oil-resistant properties required for these packaging materials from the viewpoint of preventing contamination, a heat-sealable property is often required from the viewpoint of fixing the packaging.

While fluorine compounds are excellent in water-and oil-resistance, there are concerns that they are harmful to the environment and the human body. In recent years, their use has been prohibited or avoided in many cases. Paraffin waxes are poor in water-and oil-resistance and do not offer satisfactory performance.

To address these problems, for example, Patent Literature 1 describes a coating agent for waterproof and moistureproof corrugated cardboards that is an aqueous dispersion containing a natural hydrocarbon wax, a vegetable sterol, and a low-HLB sucrose fatty acid ester. Patent Literature 2 describes a paper paint that contains a liquid paraffin, a sucrose fatty acid ester, and a watersoluble resin. Furthermore, Patent Literature 3 describes a coating agent for water- and oil-resistant paper that is a composition obtained by mixing a low-HLB sucrose fatty acid ester to an aqueous polyvinyl alcohol solution.

### Citation List

### Patent Literature

PTL 1: JP5-302065A
PTL 2: JP2011-111703A
PTL 3: JP2020-500222A

### Summary of Invention

### Technical Problem

However, the aqueous dispersion described in Patent Literatures 1 and 2 do not offer sufficient water-and oil-resistance when used as a coating agent, and requires further enhancements in water-and oil-resistance. Furthermore, Patent Literature 3 does not describe properties of the dispersion that is obtained. The present inventors studied the coating agents of Patent Literature 3 and have found that the products that are obtained are extremely viscous slurries with poor dispersion stability and are hardly applicable to industry.

Moreover, neither of them mentions a heat-sealability.

In this context, an object of the present invention is to provide an aqueous dispersion that excels in productivity, storage stability, and workability and can impart sufficient water-and oil-resistant properties and a heat-sealable property to a substrate when used as a coating agent.

### Solution to Problem

The present inventors have found that it is possible to impart sufficient water- and oil-resistance and heat-sealability to a substrate by controlling a content of a nonionic surfactant relative to a binder resin and a wax component to a specific ratio in an aqueous dispersion containing a binder resin, a nonionic surfactant, and a wax, and applying the aqueous dispersion to a substrate to form a coating film, and have achieved the present invention.

The gist of the present invention is as following [1] to [23].
[1] An aqueous dispersion comprising a binder resin (A), a nonionic surfactant (B), and a wax component (C), wherein the content of the nonionic surfactant (B) is 0.1 to 200 parts by mass based on 100 parts by mass of the binder resin (A), and 2 parts by mass or more based on 100 parts by mass of the wax component (C).
[2] The aqueous dispersion according to [1], wherein the nonionic surfactant (C) is at least one surfactant selected from polyol fatty acid esters, polyoxyethylene alkyl ethers, and polyoxyethylene alkylamines.
[3] An aqueous dispersion comprising a binder resin (A), a surfactant (B'), and a wax component (C), wherein the surfactant (B') comprises at least one of sucrose fatty acid esters and sorbitan fatty acid esters, and the content of the surfactant (B') is 0.1 to 200 parts by mass based on 100 parts by mass of the binder resin (A), and 2 parts by mass or more based on 100 parts by mass of the wax component (C).
[4] The aqueous dispersion according to any one of [1] to [3], further comprising an anionic surfactant (D).
[5] The aqueous dispersion according to any one of [1] to [4], wherein the binder resin (A) is at least one radical polymerization resin selected from the group consisting of (meth)acrylic resin, styrene resin, vinyl resin, olefin resin, and copolymers containing monomers of these resins.
[6] The aqueous dispersion according to any one of [1] to [5], further comprising pulp fibers.
[7] The aqueous dispersion according to any one of [1] to [6], wherein the aqueous dispersion has a viscosity measured with a B-type viscometer at a temperature of 25°C and a shear rate of 100 rpm of 5,000 mPa_{·}s or less.
[8] The aqueous dispersion according to any one of [1] to [7], wherein the average emulsion particle size in the aqueous dispersion measured with a laser diffraction device at a temperature of 25°C is less than 100 µm.
   The aqueous dispersion of the present invention preferably further has the following constituent features (1) to (10).
   (1) The polyol fatty acid ester of the nonionic surfactant (B) is at least one selected from sucrose fatty acid esters, sorbitan fatty acid esters, glycerin fatty acid esters, propylene glycol fatty acid esters, and polyoxyethylene fatty acid esters.
   (2) The anionic surfactant (D) is a fatty acid metal salt.
   (3) The binder resin (A) is at least one of chain polymerization resins, polycondensation resins, and natural resins.
   (4) The binder resin (A) is at least one polycondensation resin selected from the group consisting of polyester resin and polyamide resin.
   (5) The binder resin (A) is at least one natural resin selected from the group consisting of starch, rosin resin, and a terpene resin.
   (6) The HLB values of the nonionic surfactant (B) and the surfactant (B') are 9 or less.
   (7) The melting points of the nonionic surfactant (B) and the surfactant (B') are 0°C or higher.
   (8) The wax component (C) is an ester compound having a structural moiety derived from a fatty acid and a structural moiety derived from an aliphatic alcohol.
   (9) The melting point of the wax component (C) is 40°C or higher.
   (10) The total content of the binder resin (A), the nonionic surfactant (B) or the surfactant (B'), and the wax component (C) is 50 % by mass or more, and the content of the wax component (C) is 0.1 to 40 parts by mass based on 100 parts by mass of the binder resin (A).
[9] A water-resistant and oil-resistant coating agent comprising the aqueous dispersion according to any one of [1] to [8].
[10] A coating agent for paper, plastic or fiber comprising the aqueous dispersion according to any one of [1] to [8].
[11] A heat-sealable coating agent comprising the aqueous dispersion according to any one of [1] to [8].
[12] A film comprising a binder resin (A), a nonionic surfactant (B), and a wax component (C), wherein the content of the nonionic surfactant (B) is 0.1 to 200 parts by mass based on 100 parts by mass of the binder resin (A), and 2 parts by mass or more based on 100 parts by mass of the wax component (C).
[13] A film comprising a binder resin (A), a surfactant (B'), and a wax component (C), wherein the surfactant (B') comprises at least one of sucrose fatty acid esters and sorbitan fatty acid esters, and the content of the surfactant (B') is 0.1 to 200 parts by mass based on 100 parts by mass of the binder resin (A), and 2 parts by mass or more based on 100 parts by mass of the wax component (C) .
[14] A film comprising a binder resin (A), a nonionic surfactant (B), and a wax component (C), wherein the film contains a phase (X) having birefringence in the film.
[15] A film comprising a binder resin (A), a nonionic surfactant (B), and a wax component (C), wherein the surface of the film has a surface roughness Ra of 10 to 100 nm as measured by a scanning probe microscope method.
[16] The film according to any one of [12] to [15], having a film thickness of 0.1 to 30 µm.
[17] The film according to any one of [12] to [16], wherein the film is a water-resistant and oil-resistant film.
[18] The film according to any one of [12] to [17], wherein the film is a heat-seal film.
   The film of the present invention also preferably further comprises aforementioned constituent features (1) to (10).
[19] A packaging material having the film according to any one of [12] to [18].
[20] A food packaging material having the film according to any one of [12] to [18].
[21] A laminated body comprising a coating film formed on a surface of a substrate using the aqueous dispersion according to any one of [1] to [8].
[22] A laminated body comprising a substrate and the film according to any one of [12] to [18].
[23] The laminated body according to [21] or [22], wherein the substrate is paper, plastic or fiber.

### Advantageous Effects of Invention

The aqueous dispersion of the present invention is an aqueous dispersion system excellent in productivity, storage stability and workability, and when used as a coating agent, it is possible to impart sufficient water-and oil-resistance and heat-sealability to the substrate.

### Description of Embodiments

The present invention will be described in detail below.

### [Aqueous dispersions]

The aqueous dispersion according to the first embodiment of the present invention is an aqueous dispersion containing a binder resin (A), a nonionic surfactant (B), and a wax component (C), characterized in that the content of the nonionic surfactant (B) is 0.1 to 200 parts by mass based on 100 parts by mass of the binder resin (A) and 2 parts by mass or more based on 100 parts by mass of the wax component (C).

The aqueous dispersion according to the second embodiment of the present invention is an aqueous dispersion containing a binder resin (A), a surfactant (B'), and a wax component (C), characterized in that the surfactant (B') contains at least one of sucrose fatty acid esters and sorbitan fatty acid esters, and the content of the surfactant (B') is 0.1 to 200 parts by mass based on 100 parts by mass of the binder resin (A) and 2 parts by mass or more based on 100 parts by mass of the wax component (C).

Hereinafter, the aqueous dispersion according to the first embodiment of the present invention will be referred to as "aqueous dispersion 1", and the aqueous dispersion according to the second embodiment of the present invention will be referred to as "aqueous dispersion 2", and these will be collectively referred to as "aqueous dispersion of the present invention".

### [Mechanism]

The aqueous dispersion of the present invention contains a binder resin (A), a nonionic surfactant (B) or a specific surfactant (B'), and a wax component (C), and the content of the nonionic surfactant (B) or the specific surfactant (B') is 0.1 to 200 parts by mass based on 100 parts by mass of the binder resin (A), and the content of the nonionic surfactant (B) or the specific surfactant (B') is 2 parts by mass or more based on 100 parts by mass of the wax component (C), so that the aqueous dispersion has excellent stability as an aqueous dispersion, water-and oil-resistance and heat-sealability when made into a film.

Although the mechanism by which the aqueous dispersion of the present invention can achieve the above-mentioned characteristics is not fully clear, it is considered important that both the nonionic surfactant (B) or the specific surfactant (B') and the wax component (C) are contained, and that the nonionic surfactant (B) or the specific surfactant (B') is contained in a range of a certain amount or more relative to the wax component (C). This allows an appropriate mixing and phase separation state to be expressed when mixed with the binder resin (A). As a result, it is considered that high water-resistance and oil-resistance can be obtained when the film is formed. In addition, by making the composition ratio of the binder resin (A) and the nonionic surfactant (B) or the specific surfactant (B') within a certain range, the above-mentioned phase separation state is also expressed on the film surface when the dispersion of the present invention is formed into a film. This allows the dispersion of the present invention to have excellent heat-sealability.

### [Binder resin (A)]

The binder resin (A) (hereinafter sometimes referred to as "component (A)") used in the present invention is preferably at least one of synthetic resins such as chain polymerization resins and polycondensation resins, and the like, and natural resins.

Examples of the chain polymerization resin include (meth)acrylic resin, styrene resin, vinyl resin, polyester resin, amino resin, epoxy resin, urethane resin, polyether resin, polyamide resin, phenolic resin, silicone resin, olefin resin, and copolymers containing monomers of these resins (for example, styrene-(meth)acrylic resin, (meth)acrylic-urethane resin, vinyl acetate-(meth)acrylic resin, ethylene-(meth)acrylic resin, ethylene-vinyl acetate resin, (meth)acrylic-silicone resin, and the like).

Here, "(meth)acrylic" means either or both of "acrylic" and "methacrylic".

Examples of the polycondensation resin include polyamide resin, polyester resin, polycarbonate resin, and the like.

As the natural resin, at least one of starch, rosin resin, and terpene resins is preferred.

Among these, from the viewpoint of imparting water-and oil-resistance and heat-sealability, (meth)acrylic resin, styrene resin, vinyl resin, polyester resin, olefin resin, and copolymers containing monomers of these resins are preferred, and (meth)acrylic resin and its copolymer, and polyester resin and its copolymer are more preferred.

Specific examples of the (meth)acrylic resin include "Tocryl BCX-8111", "Tocryl W-168", "Tocryl X-4403", "Tocryl W-463", "Tocryl BCX-1160 R-2", "Tocryl BCX-8104", "Tocryl X-4402", and "FILLHARMO NS215" (all manufactured by Toyochem Corporation), "PE-1126", "JE-1056", "JE-1113", "KE-1148", "M-141", and "PE-2273" (all manufactured by Seiko PMC Corporation), "3401MA", "MT404-8", "3MF-320", "3MF-333", "SE-1658F", and "SE-2978F" (all manufactured by Taisei Fine Chemical Co., Ltd.), "Aquabrid 46777", and "Aquabrid UX-100" (all manufactured by Daicel Miraize Ltd.), "Boncoat AB-782-E", "Boncoat AC-501", and "Boncoat R-3380-E" (all manufactured by DIC Corporation), "Mowinyl 727", "Mowinyl 6520", and "Mowinyl 743N" (all manufactured by Japan Coating Resins Co., Ltd.), and the like.

Specific examples of the styrene resin include "Boncoat SK-105E" (manufactured by DIC Corporation), and the like.

Specific examples of the vinyl resin include vinyl acetate resin, vinyl alcohol resin, and polyvinyl chloride resin.

Specific examples of the vinyl acetate resin include "Polysol S-5J", "Polysol AX-590W", "Polysol AX-751", "Polysol AX-428J", "Polysol AX-510ZL", "Polysol AX-951", "Polysol BX-7057Z", and "Polysol AM-200" (all manufactured by Showa Denko KK), and the like.

Specific examples of the vinyl alcohol resin include "GOHSENOL N-300", "GOHSENOL NL-05", "GOHSENOL AL-06R", "GOHSENOL GH-22", "GOHSENOL GH-20R", "GOHSENOL GH-17R", "GOHSENOL GM-14R", "GOHSENOL GL-05", "GOHSENOL GL-03", "GOHSENOL KH-20", "GOHSENOL KH-17", "GOHSENOL KL-17", "GOHSENOL KL-05", "GOHSENOL KL-03", "GOHSENOL NK-05R", "GOHSENEX Z-100", "GOHSENEX Z-200", "GOHSENEX Z-300", "GOHSENEX Z-410", "GOHSENEX K-434", "GOHSENEX L-3266", "GOHSENEX CKS-50", "GOHSENEX T-330H", "GOHSENEX T-350", "GOHSENEX LW-100", "GOHSENEX LW-200", and "GOHSENEX WO-320N" (all manufactured by Mitsubishi Chemical Corporation), "Exceval RS-4104", "Exceval RS-2117", "Exceval RS-2817", "Exceval RS-1113", "Exceval RS-1713", "Exceval RS-1717", and "Exceval HR-3010" (all manufactured by Kuraray Co., Ltd.), and the like.

Specific examples of the polyvinyl chloride resin include "Vinyblan 985", "Vinyblan HD-057", and "Vinyblan 871-8" (all manufactured by Nissin Chemical Industry Co., Ltd.), and the like.

Specific examples of the polyester resin include "Nichigo-Polyester WR-901", "Nichigo-Polyester WR-905", "Nichigo-Polyester WR-961", and "Nichigo-Polyester W-1031" (all manufactured by Mitsubishi Chemical Corporation), "Vylonal MD-1200", "Vylonal MD-1500", "Vylonal MD-2000", "Vylonal MD-1480", and "Vylonal MD-1985" (all manufactured by Toyobo Co., Ltd.), "Sepoljon ES" (manufactured by Sumitomo Seika Chemicals Co., Ltd.), and the like.

Specific examples of the amino resin include "BECKOPOX EH 613w/80WA", and "BECKOPOX VEH 2106w/80WA" (all manufactured by Daicel-Allnex Ltd,), and the like.

Specific examples of the epoxy resin include "BECKOPOX EP 2307w/45WAMP", "BECKOPOX EP 2384w/57WA", and "BECKOPOX EM 2120w/45WA" (manufactured by Daicel-Allnex Corporation), "ADEKA RESIN EM Series" (manufactured by ADEKA Corporation), and the like.

Specific examples of the urethane resin include "WBR-016U" and "WBR-3004" (all manufactured by Taisei Fine Chemical Co., Ltd.), "DAOTAN VTW 1265/36WA", "DAOTAN VTW 6450/30WA", "DAOTAN VTW 6492/35WA", and "DAOTAN VTW 7001/36WA" (all manufactured by Daicel-Allnex Corporation), "HYDRAN HW-171" and "HYDRAN HW-350" (all manufactured by DIC Corporation), and the like.

Specific examples of the polyether resin include "SN Thickener 601", "Nopal 710N", "SN Thickener A-801", and "SN Thickener A-816" (all manufactured by San Nopco Ltd.), and the like.

The polyether resin may be a urethane-modified polyether resin, and specific examples include "SN Thickener 603", "SN Thickener 607", "SN Thickener 612", "SN Thickener 612N", "SN Thickener 619", "SN Thickener 621N", "SN Thickener 621TF", "SN Thickener 623N", "SN Thickener 624N", "SN Thickener 625N", "SN Thickener 629N", "Nopal 700N", and "SN Thickener A-814" (all manufactured by San Nopco Ltd.), and the like.

Specific examples of the polyamide resin include "Sepoljon NE205", and "Sepoljon PA" (all manufactured by Sumitomo Seika Chemicals Co., Ltd.), "AQ Nylon A-90", "AQ Nylon P-70", "AQ Nylon P-95", and "AQ Nylon T-70" (manufactured by Toray Industries, Inc.), and the like.

Specific examples of the silicone resin include "DOWSIL 8024", "DOWSIL SH 7024", and "DOWSIL SH 7025 EX" (all manufactured by Dow Inc.), and the like.

Specific examples of the olefin resin include "AQUACER 532", "AQUACER 513", "AQUACER 517", "AQUACER 552", "AQUACER 593", "AQUACER 1547", and "AQUACER 2500" (all manufactured by BYK Corporation), "Sepoljon G" (manufactured by Sumitomo Seika Chemicals Co., Ltd.), "Arrowbase SB-1200", "Arrowbase SE-1200", "Arrowbase SD-1200", "Arrowbase DA-1010", "Arrowbase DC-1010", and "Arrowbase YA-6010" (all manufactured by Unitika Ltd.), and the like.

Specific examples of the styrene-(meth)acrylic resin include "Tocryl S-171.", "Tocryl BCX-3101", "Tocryl W-172", "FILLHARMO GS400", and "FILLHARMO GS500" (all manufactured by Toyochem Corporation), "Polysol TI-3052", and "Polysol AM-610" (all manufactured by Showa Denko KK), "TE-1048", "PE-1304", "HE-1335", "RE-1075", and "NE-2260" (all manufactured by Seiko PMC Corporation), "Mowinyl 752", "Mowinyl 972", and "Mowinyl 6720" (all manufactured by Japan Coating Resins Corporation), and the like.

Specific examples of the (meth)acrylic-urethane resin include "3DR-9057", "3DR-1000", "WEM-200U", "WEM-3000", and "WEM-505C" (all manufactured by Taisei Fine Chemical Co., Ltd.), and the like.

Specific examples of the vinyl acetate-(meth)acrylic resin include "Polysol 747L" (manufactured by Showa Denko KK), "Vinyblan A68J1", "Vinyblan A68J1N", and "Vinyblan A70J2M" (all manufactured by Nissin Chemical Industry Co., Ltd.), and the like.

Specific examples of the ethylene-(meth)acrylic resin include "Aquatex AC-3100" (manufactured by Japan Coating Resins Co., Ltd.), "AQUACER 1061", and "AQUACER 1055" (all manufactured by BYK Corporation), and the like.

Specific examples of the ethylene-vinyl acetate resin include "Polysol AM-3000", "Polysol EVA AD-21", "Polysol EVA AD-5", "Polysol EVA AD-56", "Polysol HG-600H", "Polysol EVA ADE-107", and "Polysol EVA M-260F" (all manufactured by Showa Denko K.K.), "Aquatex EC-1200", "Aquatex EC-1700", and "Aquatex EC-1800" (all manufactured by Japan Coating Resin co.,Ltd.), "Sepoljon VA406" (manufactured by Sumitomo Seika Chemicals Co., Ltd.), "Vinyblan 3483Y" (manufactured by Nissin Chemical Industry Co., Ltd.), "Sumikaflex S-201HQ", "Sumikaflex S-305HQ", "Sumikaflex S-465HQ", and "Sumikaflex S-752" (all manufactured by Sumika Chemtex Co., Ltd.), and the like.

Specific examples of the (meth)acrylic-silicone resin include "Polysol AP-3900" (manufactured by Showa Denko KK), "Aquabrid ASi-91", and "Aquabrid 4790" (all manufactured by Daicel Miraize Ltd.), "Mowinyl LDM7523", "Mowinyl 7110", and "Mowinyl HS-531" (all manufactured by Japan Coating Resins Co., Ltd.), and the like.

These binder resins (A) may be used alone or in combination of two or more of the same or different binder resins (A).

### [Nonionic surfactant (B)/surfactant (B')]

The surfactant (B) used in the present invention (hereinafter sometimes referred to as "component (B)") is a nonionic surfactant in aqueous dispersion 1, and is at least one surfactant (hereinafter sometimes referred to as "specific surfactant (B')" or simply "component (B')") of sucrose fatty acid esters and sorbitan fatty acid esters in aqueous dispersion 2.

As the nonionic surfactant, any publicly known nonionic surfactant may be used, but it is more preferable to use at least one selected from polyol fatty acid esters, polyoxyethylene fatty acid esters, polyoxyethylene alkyl ethers, and polyoxyethylene alkyl amines from the viewpoints of water dispersibility, film-forming property, and improvement of water-and oil-resistance of the coating film.

Here, the polyol fatty acid ester is preferably at least any one of sucrose fatty acid ester, sorbitan fatty acid ester, glycerin fatty acid ester, propylene glycol fatty acid ester, and polyoxyethylene fatty acid ester. From the viewpoints of water dispersibility, film-forming property, and improvement of water-and oil-resistance of the coating film, sucrose fatty acid ester, sorbitan fatty acid ester, and glycerin fatty acid ester are preferable, and sucrose fatty acid ester and sorbitan fatty acid ester are more preferable, and sucrose fatty acid ester is particularly preferable.

As the sucrose fatty acid ester, a publicly known general sucrose fatty acid ester can be used, as long as at least one of the eight hydroxyl groups of sucrose forms an ester structure with a fatty acid.

For example, a sucrose fatty acid ester may be used in which the fatty acid-derived structural moiety in the sucrose fatty acid ester is a structural moiety derived from a saturated or unsaturated fatty acid having 10 to 30 carbon atoms (preferably 12 to 28 carbon atoms, and more preferably 12 to 22 carbon atoms), specifically, a structural moiety derived from lauric acid, myristic acid, palmitic acid, oleic acid, stearic acid, or erucic acid. Depending on the purpose of use of the sucrose fatty acid ester, selection may be made from those having fatty acid-derived structural moieties derived from a single kind of fatty acid and those having fatty acid-derived structural moieties derived from a combination of two or more kinds of fatty acids in a specific ratio.

Examples of the above-mentioned sucrose fatty acid ester include "Ryoto Sugar Ester S-370", "Ryoto Sugar Ester S-570", "Ryoto Sugar Ester S-970", "Ryoto Sugar Ester S-1170", "Ryoto Sugar Ester S-1570", "Ryoto Sugar Ester S-1670", "Ryoto Sugar Ester P-170", "Ryoto Sugar Ester P-1670", "Ryoto Sugar Ester M-1695", "Ryoto Sugar Ester O-170", "Ryoto Sugar Ester O-1570", "Ryoto Sugar Ester L-195", "Ryoto Sugar Ester L-595", "Ryoto Sugar Ester L-1695", "Ryoto Sugar Ester B-370", "Ryoto Sugar Ester ER-190" and "Ryoto Sugar Ester POS-135" (manufactured by Mitsubishi Chemical Corporation), "DK Ester F-160", "DK Ester F-140", "DK Ester F-110", "DK Ester F-70" and "DK Ester F-50" (manufactured by Dai-ichi Kogyo Seiyaku Co., Ltd.), and the like.

Among those described above, sucrose fatty acid esters that are solid at 0°C and above are preferable because the use of such ester increases the range of the industrial application of the aqueous dispersion according to the present invention.

The sucrose fatty acid esters may be used singly, or two or more may be used in combination.

As the sorbitan fatty acid ester, a publicly known general sorbitan fatty acid ester can be used, and it is sufficient that at least one of the four hydroxyl groups of sorbitan forms an ester structure with a fatty acid.

For example, a sorbitan fatty acid ester may be used in which the fatty acid-derived structural moiety in the sorbitan fatty acid ester is a structural moiety derived from a saturated or unsaturated fatty acid having 10 to 30 carbon atoms (preferably 12 to 28 carbon atoms, and more preferably 12 to 22 carbon atoms), specifically, a structural moiety derived from lauric acid, myristic acid, palmitic acid, oleic acid, stearic acid, or erucic acid. Depending on the purpose of use of the sorbitan fatty acid ester, selection may be made from those having fatty acid-derived structural moieties derived from a single kind of fatty acid and those having fatty acid-derived structural moieties derived from a combination of two or more kinds of fatty acids in an a specific ratio.

Examples of the sorbitan fatty acid ester include "Rheodol SP-L10", "Rheodol SP-P10", "Rheodol SP-S10V", "Rheodol SP-S20", "Rheodol SP-S30V", "Rheodol SP-010V", "Reodore SP-D30V", "Reodore SP-L10", "Reodore AS-10V", "Reodore AO-10V", "Reodore AS-15V", "Emazol L-10V", "Emazol P-10V ", "Emazol S-10V", "Emazol O-10V", "Emazol L-120V", "Emazol O-120V", "Emazol S-120V", "Reodore TW-L120", "Reodore TW-L106" , "Reodore TW-P120", "Reodore TW-S120V", "Reodore TW-S106V", "Reodore TW-S320V", "Reodore TW-O120V", "Reodore TW-O106V", "Reodore TW-O320V", "Leodore TW-IS399C", and "Leodore Super TW-L120" (manufactured by Kao Corporation), "Rikemal L-250A", "Rikemal S-300W", "Rikemal OV-250", "Rikemal OR-85" , "Rikemal B-150", "Poem S-60V", "Poem S-65V", "Poem O-80V", and "Poem C-250" (manufactured by Riken Vitamin Co., Ltd.), "Sorbon S-10E" , "Sorbon S-20", "Sorbon S-40", "Sorbon S-60", "Sorbon S-80", and "Sorbon S-85" (manufactured by Toho Chemical Industry Co., Ltd.), "Nonion CP-08R", "Nonion LP-20R", "Nonion PP-40R pellet", "Nonion SP-60R pellet", "Nonion OP-80R", "Nonion OP-83RAT", and "Nonion OP-85R" (manufactured by NOF Corporation), and the like.

Among those described above, sorbitan fatty acid esters that are solid at 0°C and above are preferable because the use of such ester increases the range of the industrial application of the aqueous dispersion according to the present invention.

The sorbitan fatty acid esters may be used singly, or two or more may be used in combination.

As the glycerin fatty acid ester, a publicly known general glycerin fatty acid ester can be used, and it is sufficient that at least one of the three hydroxyl groups of glycerin forms an ester structure with a fatty acid.

For example, a glycerin fatty acid ester may be used in which the fatty acid-derived structural moiety in the glycerin fatty acid ester is a structural moiety derived from a saturated or unsaturated fatty acid having 10 to 30 carbon atoms (preferably 12 to 28 carbon atoms, and more preferably 12 to 22 carbon atoms), specifically, a structural moiety derived from lauric acid, myristic acid, palmitic acid, oleic acid, stearic acid, or erucic acid. Depending on the purpose of use of the glycerin fatty acid ester, selection may be made from those having fatty acid-derived structural moieties derived from a single kind of fatty acid and those having fatty acid-derived structural moieties derived from a combination of two or more kinds of fatty acids in a specific ratio.

The glycerin fatty acid ester may be a glycerin organic acid fatty acid ester (or an organic acid monoglyceride), or a polyglycerin fatty acid ester.

The glycerin organic acid fatty acid ester is an ester in which an organic acid (for exapmle, acetic acid, lactic acid, citric acid, succinic acid, diacetyltartaric acid) is further bonded to the hydroxyl group of a monoglyceride in which one fatty acid is bonded to glycerin.

The polyglycerin fatty acid ester have an average degree of polymerization of glycerin of, for example, 2 to 10, and may contain one or more types of fatty acid residues.

Specific examples of the glycerin fatty acid ester include "Rheodol MS-50", "Rheodol MS-60", "Rheodol MO-60", "Rheodol MS-165V", "Excel S-95", "Excel VS-95", "Excel O-95R", "Excel O-95N", "Excel 200", "Excel 122V", "Excel P-40S", "Excel 84", "Step SS", "Homotex PT", and "Exepar G-MB" (all manufactured by Kao Corporation), "Rikemal S-100", "Rikemal S-100P", "Rikemal S-100A", "Rikemal H-100", "Poem V-100", "Poem PV-100", "Rikemal B-100", "Rikemal HC-100", "Rikemal OL-100(E)", "Poem M-100", "Poem M-200", "Poem M-300", "Rikemal S-200", "Rikemal HS-200K", "Poem V-200", "Poem P-200", "Poem B-200", "Poem OL-200VM", "Poem B-10", "Poem B-30", "Poem K-30", "Poem W-60", "BIOCIZER", "Rikemar PL-004", "Poem G-002", "Poem J-4081V", "Poem PR-100", "Poem PR-300", "Rikemar L-71-D", "Rikemar S-71-D", "Rikemar 0-71-D(E)", "Poem DL-100", "Poem DM-100", "Poem DS-100A", "Poem DO-100v", "Poem J-4081V", "Poem PR-100", and "Poem PR-300" (all manufactured by Riken Vitamin Co., Ltd.), "Ryoto Poriguri Ester CA-F4", "Ryoto Poriguri Ester L-10D", "Ryoto Poriguri Ester L-7D", "Ryoto Poriguri Ester M-10D", "Ryoto Poriguri Ester M-7D", "Ryoto Poriguri Ester O-50D", "Ryoto Poriguri Ester O-50D", "Ryoto Poriguri Ester B-100D", and "Ryoto Poriguri Ester B-70D" (all manufactured by Mitsubishi Chemical Corporation), "SY Glister DAS-7S", "SY Glister TS-5S", "SY Glister PS-5S", "SY Glister MS-3S", "SY Glister TS-3S", "SY Glister PS-3S", "SY Glister DAO-7S" , "SY Glister PO-5S", "SY Glister MO-3S", "SY Glister PO-3S", "SY Glister MCA-150", "SY Glister HB-750", "SY Glister DDB-750", "SY Glister OE-750", "SY Glister CV-1L", "SY Glister CV-23", "SY Glister THL-15", "SY Glister THL-17", "SY Glister THL 44", "SY Glister THL-5 0", "SY Glister THL-55", "SY Glister GP-120", "SY Glister GP-170", "SY Glister GP-450", "SY Glister CR-350H", "SY Glister CR-310", "SY Glister CR-500", "SY Glister CR-ED", and "SY Glister CRS-75" (all manufactured by Sakamoto Yakuhin kyogyo Co., Ltd.), "Sansoft Q-123H-C", "Sansoft A-143E-C", "Sansoft A-173E -C", "Sansoft A-186E-C", "Sansoft Q-175S-C", and "Sansoft Q-185S-C" (all manufactured by Taiyo Kagaku Co., Ltd.), "MONOGLY D", "MONOGLY MB", "MONOGLY M-14", "MONOGLY H", "UNIGLY GL-106", "UNIGLY GS-106", "UNIGLY GO-102R", and "UNIGLY GO-106" (all manufactured by NOF Corporation), "PGLE ML10", and "PGLAL ML04" (all manufactured by Daicel Corporation), and the like.

Among these, it is preferable to use a glycerin fatty acid ester that is solid at 0°C or higher because the use of such ester increases the range of the industrial application of the aqueous dispersion according to the present invention.

These glycerin fatty acid esters may be used alone or in combination of two or more types.

As the propylene glycol fatty acid ester, a publicly known general propylene glycol fatty acid ester can be used, and it is sufficient that at least one of the tow hydroxyl groups of propylene glycol forms an ester structure with a fatty acid.

For example, a propylene glycol fatty acid ester may be used in which the fatty acid-derived structural moiety in the propylene glycol fatty acid ester is a structural moiety derived from a saturated or unsaturated fatty acid having 10 to 30 carbon atoms (preferably 12 to 28 carbon atoms, and more preferably 12 to 22 carbon atoms), specifically, a structural moiety derived from lauric acid, myristic acid, palmitic acid, oleic acid, stearic acid, or erucic acid. Depending on the purpose of use of the propylene glycol fatty acid ester, selection may be made from those having fatty acid-derived structural moieties derived from a single kind of fatty acid and those having fatty acid-derived structural moieties derived from a combination of two or more kinds of fatty acids in a specific ratio.

Specific examples of the propylene glycol fatty acid ester include "Kao Homotex PS-200V" (manufactured by Kao Corporation), "Type BP", "Rikemal PP-100", "Rikemal PS-100", "Rikemal PO-100V", and "Rikemal PB-100" (all manufactured by Riken Vitamin Co., Ltd.), and the like.

Among these, it is preferable to use a propylene glycol fatty acid ester that is solid at 0°C or higher because the use of such ester increases the range of the industrial application of the aqueous dispersion according to the present invention.

These propylene glycol fatty acid esters may be used alone or in combination of two or more types.

As the polyoxyethylene fatty acid ester, a publicly known general polyoxyethylene fatty acid ester can be used, and it is sufficient that at least one of the tow hydroxyl groups of polyoxyethylene glycol forms an ester structure with a fatty acid.

For example, a polyoxyethylene fatty acid ester may be used in which the fatty acid-derived structural moiety in the polyoxyethylene fatty acid ester is a structural moiety derived from a saturated or unsaturated fatty acid having 10 to 30 carbon atoms (preferably 12 to 28 carbon atoms, and more preferably 12 to 22 carbon atoms), specifically, a structural moiety derived from lauric acid, myristic acid, palmitic acid, oleic acid, stearic acid, or erucic acid. Depending on the purpose of use of the polyoxyethylene fatty acid ester, selection may be made from those having fatty acid-derived structural moieties derived from a single kind of fatty acid and those having fatty acid-derived structural moieties derived from a combination of two or more kinds of fatty acids in a specific ratio.

Specific examples of the polyoxyethylene fatty acid ester include "Nonion L-2", "Nonion S-2", "Nonion S-4", "Nonion S-6", "Nonion D-2", and "Nonion O-4" (all manufactured by NOF Corporation), "Leofat D115", and "Leofat 60/15" (all manufactured by Lion Specialty Chemicals Co., Ltd.), and the like.

Among these, it is preferable to use a polyoxyethylene fatty acid ester that is solid at 0°C or higher because the use of such ester increases the range of the industrial application of the aqueous dispersion according to the present invention.

These polyoxyethylene fatty acid esters may be used alone or in combination of two or more types.

As the polyoxyethylene alkyl ether, a publicly known general polyoxyethylene alkyl ether can be used, as long as at least one of the two hydroxyl groups of polyethylene glycol forms an ether structure with an aliphatic alcohol.

For example, a polyoxyethylene alkyl ether in which the structural moiety derived from the aliphatic alcohol in the polyoxyethylene alkyl ether is a structural moiety derived from a saturated or unsaturated aliphatic alcohol having 10 to 30 carbon atoms (preferably 12 to 28 carbon atoms, and more preferably 12 to 22 carbon atoms), specifically, a structural moiety derived from lauryl alcohol, myristyl alcohol, palmityl alcohol, cetyl alcohol, oleyl alcohol, stearyl alcohol, or erucyl alcohol, may be used.

Specific examples of the polyoxyethylene alkyl ether include "Emulgen 102KG", "Emulgen 103", "Emulgen 306P", and "Emulgen 404" (all manufactured by Kao Corporation), "Nonion K-204", "Nonion K-220", "Nonion P-208", "Nonion E-202", "Nonion E-205", "Nonion E-212", "Nonion S-202", and "Nonion MN-811" (all manufactured by NOF Corporation), "Pionin D-1103-D", "Pionin D-1103-S", "Newkalgen D-1203", "Pionin D-1803", "Pion in D-1402", and "Pionin D-1502" (all manufactured by Takemoto Oil & Fat Co., Ltd.), and the like.

Among these, it is preferable to use a polyoxyethylene alkyl ether that is solid at 0°C or higher because the use of such ester increases the range of the industrial application of the aqueous dispersion according to the present invention.

These polyoxyethylene alkyl ethers may be used alone or in combination of two or more types.

As the polyoxyethylene alkyl amine, a publicly known general polyoxyethylene alkyl amine can be used, such as a compound of the general formula R-N-[(CH₂CH₂O)m-H]₂ (R is a hydrocarbon group having 4 to 20 carbon atoms, and the two m's may be the same or different).

Specific examples of polyoxyethylene alkyl amine include "Amiet 102", "Amiet 302", and "Aminone L-02" (all manufactured by Kao Corporation), "Stafoam FK", "Stafoam F", "Stafoam T", "Stafoam DL", "Stafoam DF-1", "Stafoam DF-2", "Stafoam DF-4", "Stafoam DFC", "Stafoam DO", "Stafoam DOS", "Stafoam MF Pellet", "Stafoam LIPA", "Nymid MF-203", "Nymid MF-210", and "Nymid MT-215" (all manufactured by NOF Corporation), "Liponol C/12", "Liponol C/15", "Liponol C/25", "Liponol O/12", "Liponol O/15", "Liponol T/12", "Liponol T/15", "Liponol T/25", "Liponol HT/12", and "Liponol HT114" (all manufactured by Lion Specialty Chemicals Co., Ltd.), and the like.

Among these, it is preferable to use a polyoxyethylene alkyl ether that is solid at 0°C or higher because the use of such ester increases the range of the industrial application of the aqueous dispersion according to the present invention.

These polyoxyethylene alkyl ether may be used alone or in combination of two or more types.

The HLB value of the nonionic surfactant (B) or the surfactant (B') used in the present invention is preferably 9 or less, more preferably 7 or less, and even more preferably 6 or less. When the HLB value is not too large, the water-resistance of the coating film formed tends to be excellent. On the other hand, the lower limit of the HLB value of the nonionic surfactant (B) or the surfactant (B') is preferably 1 or more from the viewpoint of improving oil-resistance.

The HLB value can also be adjusted to the above preferred range by mixing two or more types of nonionic surfactants having high HLB values and nonionic surfactants having low HLB values.

As mentioned above, it is preferable that the nonionic surfactant (B) or the surfactant (B') of the present invention has a melting point of 0°C or more, since this can broaden the range of application from the viewpoint of industrial use of the aqueous dispersion of the present invention and can easily improve the water-and oil-resistance when formed into a film. The melting point of the nonionic surfactant (B) or the surfactant (B') is preferably 5°C or higher, more preferably 10°C or higher, particularly preferably 15°C or higher, especially preferably 25°C or higher, and most preferably 40°C or higher. The melting point of the nonionic surfactant (B) or the surfactant (B') is preferably 200°C or lower, more preferably 150°C or lower, even more preferably 100°C or lower, particularly preferably 85°C or lower, and most preferably 70°C or lower, considering the processing temperature and decomposition temperature.

These nonionic surfactants (B) or the surfactants (B') may be used alone, or the same or different surfactants may be used in combination.

### [Wax (C)]

The wax (C) used in the present invention (hereinafter sometimes referred to as "component (C)") is a solid at normal temperature (23°C in the present invention) and becomes a liquid when heated, and is distinguished from liquid paraffin, which is a liquid at normal temperature. The melting point of the wax component (C) is usually normal temperature or higher, preferably 40°C or higher, and more preferably 60°C or higher. On the other hand, it is usually 200°C or lower, preferably 150°C or lower, more preferably 100°C or lower, and particularly preferably 90°C or lower. When the melting point is high, the resulting coating film tends to be less sticky, and the oil-resistance targeted in the present invention tend to be easily obtained. On the other hand, when the melting point is low, the wax tends to have excellent dispersibility in water.

Examples of the wax (C) include hydrocarbon waxes such as solid paraffins, microcrystalline waxes ceresin waxes, polyethylene waxes, polypropylene waxes, and the like, hydrogenated oils such as hydrogenated castor oil, hydrogenated jojoba oil, and the like, natural waxes mainly composed of fatty acid ester compounds such as carnauba wax, rice bran wax, beeswax, montan wax, candelilla wax, and the like, synthetic waxes such as synthetic fatty acid esters, synthetic fatty acid amides, and the like. Among these, fatty acid ester compounds having a structural moiety derived from a fatty acid and a structural moiety derived from a aliphatic alcohol are preferred.

The number of carbon atoms in the structural moiety derived from the fatty acid is usually 10 to 40, preferably 12 to 38, more preferably 14 to 36, and particularly preferably 16 to 34.

When the number of carbon atoms is large, excellent water-and oil-resistance tends to provide when the aqueous dispersion is coated on a substrate. When the number of carbon atoms is small, excellent dispersibility in water tends to provide.

Examples of the above-mentioned fatty acid include lauric acid, myristic acid, pentadecyl acid, palmitic acid, palmitoleic acid, margaric acid, stearic acid, oleic acid, vaccenic acid, linoleic acid, linolenic acid, eleostearic acid, arachidic acid, eicosaedic acid, mead acid, arachidonic acid, behenic acid, tricosylic acid, lignoceric acid, nervonic acid, pentacosanoic acid, cerotic acid, heptacosanoic acid, montanic acid, nonacosanoic acid, melissic acid, hentriacontanoic acid, dotriacontanoic acid, tritriacontane acid, tetratriacontanoic acid, pentatriacontanoic acid, hexatriacontanoic acid, heptatriacontanoic acid, octatriacontanoic acid, nonatriacontanoic acid, tetracontanoic acid, and the like.

The number of carbon atoms in the aliphatic alcohol-derived structural moiety is usually 12 to 40, preferably 14 to 38, more preferably 16 to 36, and particularly preferably 18 to 34.

When the number of carbon atoms is large, excellent water-and oil-resistance tends to provide when the aqueous dispersion is coated on a substrate. When the number of carbon atoms is small, excellent dispersibility in water tends to provide.

Examples of the above-mentioned aliphatic alcohol include lauryl alcohol, tridecyl alcohol, myristyl alcohol, pentadecyl alcohol, 1-hexadecanol, palmitole alcohol, 1-heptadecanol, stearyl alcohol, isostearyl alcohol, elaidyl alcohol, oleyl alcohol, linoleyl alcohol, elidolinoleyl alcohol, ricinoleyl alcohol, nonadecyl alcohol, arachidyl alcohol, heneicosanol, behenyl alcohol, erucyl alcohol, lignoseryl alcohol, seryl alcohol, 1-heptacosanol, montanyl alcohol, 1-nonacosanol, myricyl alcohol, 1-dotriacontanol, 1-tetratriacontanol, and the like. Preferred are stearyl alcohol, nonadecyl alcohol, arachidyl alcohol, heneicosanol, behenyl alcohol, lignoceryl alcohol, seryl alcohol, 1-heptacosanol, montanyl alcohol, 1-nonacosanol, myricyl alcohol, 1-dotriacontanol and 1-tetratriacontanol.

The ester compounds having a fatty acid-derived structural moiety and an aliphatic alcohol-derived structural moiety may be reaction products of the fatty acid described above and the aliphatic alcohol described above.

Examples of the ester compounds having a fatty acid-derived structural moiety and an aliphatic alcohol-derived structural moiety include lauric acids such as lauryl laurate, tridecyl laurate, myristyl laurate, pentadecyl laurate, hexadecan-1-yl laurate, palmitrail laurate, heptadecan-1-yl laurate, stearyl laurate, isostearyl laurate, elaidyl laurate, oleyl laurate, linoleyl laurate, elidelinoleyl laurate, ricinoleyl laurate, nonadecyl laurate, arachidyl laurate, heneicosane laurate, behenyl laurate, erucyl laurate, lignoceryl laurate, seryl laurate, heptacosan-1-yl laurate, montanyl laurate, nonacosan-1-yl laurate, myricyl laurate, dotriacontan-1-yl laurate, tetratriacontan-1-yl laurate, and the like; myristic acids such as lauryl myristate, tridecyl myristate, myristyl myristate, pentadecyl myristate, hexadecan-1-yl myristate, palmitrail myristate, heptadecan-1-yl myristate, stearyl myristate, isostearyl myristate, elaidyl myristate, oleyl myristate, linoleyl myristate, elidelinoleyl myristate, ricinoleyl myristate, nonadecyl myristate, arachidyl myristate, heneicosane myristate, behenyl myristate, erucyl myristate, lignoceryl myristate, seryl myristate, heptacosan-1-yl myristate, montanyl myristate, nonacosan-1-yl myristate, myricyl myristate, dotriacontan-1-yl myristate, tetratriacontan-1-yl myristate, and the like;
pentadecyl acids such as lauryl pentadecylate, tridecyl pentadecylate, myristyl pentadecylate, pentadecyl pentadecylate, hexadecan-1-yl pentadecylate, palmitrail pentadecylate, heptadecan-1-yl pentadecylate, stearyl pentadecylate, isostearyl pentadecylate, elaidyl pentadecylate, oleyl pentadecylate, linoleyl pentadecylate, elidelinoleyl pentadecylate, ricinoleyl pentadecylate, nonadecyl pentadecylate, arachidyl pentadecylate, heneicosane pentadecylate, behenyl pentadecylate, erucyl pentadecylate, lignoceryl pentadecylate, seryl pentadecylate, heptacosan-1-yl pentadecylate, montanyl pentadecylate, nonacosan-1-yl pentadecylate, myricyl pentadecylate, dotriacontan-1-yl pentadecylate, tetratriacontan-1-yl pentadecylate, and the like;
palmitic acids such as lauryl palmitate, tridecyl palmitate, myristyl palmitate, pentadecyl palmitate, hexadecan-1-yl palmitate, palmitrail palmitate, heptadecan-1-yl palmitate, stearyl palmitate, isostearyl palmitate, elaidyl palmitate, oleyl palmitate, linoleyl palmitate, elidelinoleyl palmitate, ricinoleyl palmitate, nonadecyl palmitate, arachidyl palmitate, heneicosane palmitate, behenyl palmitate, erucyl palmitate, lignoceryl palmitate, seryl palmitate, heptacosan-1-yl palmitate, montanyl palmitate, nonacosan-1-yl palmitate, myricyl palmitate, dotriacontan-1-yl palmitate, tetratriacontan-1-yl palmitate, and the like;
palmitoleic acids such as lauryl palmitoleate, tridecyl palmitoleate, myristyl palmitoleate, pentadecyl palmitoleate, hexadecan-1-yl palmitoleate, palmitrail palmitoleate, heptadecan-1-yl palmitoleate, stearyl palmitoleate, isostearyl palmitoleate, elaidyl palmitoleate, oleyl palmitoleate, linoleyl palmitoleate, elidelinoleyl palmitoleate, ricinoleyl palmitoleate, nonadecyl palmitoleate, arachidyl palmitoleate, heneicosane palmitoleate, behenyl palmitoleate, erucyl palmitoleate, lignoceryl palmitoleate, seryl palmitoleate, heptacosan-1-yl palmitoleate, montanyl palmitoleate, nonacosan-1-yl palmitoleate, myricyl palmitoleate, dotriacontan-1-yl palmitoleate, tetratriacontan-1-yl palmitoleate, and the like;
margaric acids such as lauryl margarate, tridecyl margarate, myristyl margarate, pentadecyl margarate, hexadecan-1-yl margarate, palmitrail margarate, heptadecan-1-yl margarate, stearyl margarate, isostearyl margarate, elaidyl margarate, oleyl margarate, linoleyl margarate, elidelinoleyl margarate, ricinoleyl margarate, nonadecyl margarate, arachidyl margarate, heneicosane margarate, behenyl margarate, erucyl margarate, lignoceryl margarate, seryl margarate, heptacosan-1-yl margarate, montanyl margarate, nonacosan-1-yl margarate, myricyl margarate, dotriacontan-1-yl margarate, tetratriacontan-1-yl margarate, and the like;
stearic acids such as lauryl stearate, tridecyl stearate, myristyl stearate, pentadecyl stearate, hexadecan-1-yl stearate, palmitrail stearate, heptadecan-1-yl stearate, stearyl stearate, isostearyl stearate, elaidyl stearate, oleyl stearate, linoleyl stearate, elidelinoleyl stearate, ricinoleyl stearate, nonadecyl stearate, arachidyl stearate, heneicosane stearate, behenyl stearate, erucyl stearate, lignoceryl stearate, seryl stearate, heptacosan-1-yl stearate, montanyl stearate, nonacosan-1-yl stearate, myricyl stearate, dotriacontan-1-yl stearate, tetratriacontan-1-yl stearate, and the like;
oleic acids such as lauryl oleate, tridecyl oleate, myristyl oleate, pentadecyl oleate, hexadecan-1-yl oleate, palmitrail oleate, heptadecan-1-yl oleate, stearyl oleate, isostearyl oleate, elaidyl oleate, oleyl oleate, linoleyl oleate, elidelinoleyl oleate, ricinoleyl oleate, nonadecyl oleate, arachidyl oleate, heneicosane oleate, behenyl oleate, erucyl oleate, lignoceryl oleate, seryl oleate, heptacosan-1-yl oleate, montanyl oleate, nonacosan-1-yl oleate, myricyl oleate, dotriacontan-1-yl oleate, tetratriacontan-1-yl oleate, and the like;
vaccenic acids such as lauryl vaccenate, tridecyl vaccenate, myristyl vaccenate, pentadecyl vaccenate, hexadecan-1-yl vaccenate, palmitrail vaccenate, heptadecan-1-yl vaccenate, stearyl vaccenate, isostearyl vaccenate, elaidyl vaccenate, oleyl vaccenate, linoleyl vaccenate, elidelinoleyl vaccenate, ricinoleyl vaccenate, nonadecyl vaccenate, arachidyl vaccenate, heneicosane vaccenate, behenyl vaccenate, erucyl vaccenate, lignoceryl vaccenate, seryl vaccenate, heptacosan-1-yl vaccenate, montanyl vaccenate, nonacosan-1-yl vaccenate, myricyl vaccenate, dotriacontan-1-yl vaccenate, tetratriacontan-1-yl vaccenate, and the like;
linoleic acids such as lauryl linoleate, tridecyl linoleate, myristyl linoleate, pentadecyl linoleate, hexadecan-1-yl linoleate, palmitrail linoleate, heptadecan-1-yl linoleate, stearyl linoleate, isostearyl linoleate, elaidyl linoleate, oleyl linoleate, linoleyl linoleate, elidelinoleyl linoleate, ricinoleyl linoleate, nonadecyl linoleate, arachidyl linoleate, heneicosane linoleate, behenyl linoleate, erucyl linoleate, lignoceryl linoleate, seryl linoleate, heptacosan-1-yl linoleate, montanyl linoleate, nonacosan-1-yl linoleate, myricyl linoleate, dotriacontan-1-yl linoleate, tetratriacontan-1-yl linoleate, and the like;
linolenic acids such as lauryl linolenate, tridecyl linolenate, myristyl linolenate, pentadecyl linolenate, hexadecan-1-yl linolenate, palmitrail linolenate, heptadecan-1-yl linolenate, stearyl linolenate, isostearyl linolenate, elaidyl linolenate, oleyl linolenate, linoleyl linolenate, elidelinoleyl linolenate, ricinoleyl linolenate, nonadecyl linolenate, arachidyl linolenate, heneicosane linolenate, behenyl linolenate, erucyl linolenate, lignoceryl linolenate, seryl linolenate, heptacosan-1-yl linolenate, montanyl linolenate, nonacosan-1-yl linolenate, myricyl linolenate, dotriacontan-1-yl linolenate, tetratriacontan-1-yl linolenate, and the like;
eleostearic acids such as lauryl eleostearate, tridecyl eleostearate, myristyl eleostearate, pentadecyl eleostearate, hexadecan-1-yl eleostearate, palmitolely eleostearate, heptadecan-1-yl eleostearate, stearyl eleostearate, isostearyl eleostearate, elaidyl eleostearate, oleyl eleostearate, linoleyl eleostearate, elidelinoleyl eleostearate, ricinoleyl eleostearate, nonadecyl eleostearate, arachidyl eleostearate, heneicosane eleostearate, behenyl eleostearate, erucyl eleostearate, lignoceryl eleostearate, seryl eleostearate, heptacosan-1-yl eleostearate, montanyl eleostearate, nonacosan-1-yl eleostearate, myricyl eleostearate, dotriacontan-1-yl eleostearate, tetratriacontan-1-yl eleostearate, and the like;
arachidic acids such as lauryl arachidate, tridecyl arachidate, myristyl arachidate, pentadecyl arachidate, hexadecan-1-yl arachidate, palmitrail arachidate, heptadecan-1-yl arachidate, stearyl arachidate, isostearyl arachidate, elaidyl arachidate, oleyl arachidate, linoleyl arachidate, elidelinoleyl arachidate, ricinoleyl arachidate, nonadecyl arachidate, arachidyl arachidate, heneicosane arachidate, behenyl arachidate, erucyl arachidate, lignoceryl arachidate, seryl arachidate, heptacosan-1-yl arachidate, montanyl arachidate, nonacosan-1-yl arachidate, myricyl arachidate, dotriacontan-1-yl arachidate, tetratriacontan-1-yl arachidate, and the like;
eicosaedic acids such as lauryl eicosaedate, tridecyl eicosaedate, myristyl eicosaedate, pentadecyl eicosaedate, hexadecan-1-yl eicosaedate, palmitrail eicosaedate, heptadecan-1-yl eicosaedate, stearyl eicosaedate, isostearyl eicosaedate, elaidyl eicosaedate, oleyl eicosaedate, linoleyl eicosaedate, elidelinoleyl eicosaedate, ricinoleyl eicosaedate, nonadecyl eicosaedate, arachidyl eicosaedate, heneicosane eicosaedate, behenyl eicosaedate, erucyl eicosaedate, lignoceryl eicosaedate, seryl eicosaedate, heptacosan-1-yl eicosaedate, montanyl eicosaedate, nonacosan-1-yl eicosaedate, myricyl eicosaedate, dotriacontan-1-yl eicosaedate, tetratriacontan-1-yl eicosaedate, and the like;
mead acids such as lauryl mead acid, tridecyl mead acid, myristyl mead acid, pentadecyl mead acid, hexadecan-1-yl mead acid, palmitrail mead acid, heptadecan-1-yl mead acid, stearyl mead acid, isostearyl mead acid, elaidyl mead acid, oleyl mead acid, linoleyl mead acid, elidelinoleyl mead acid, ricinoleyl mead acid, nonadecyl mead acid, arachidyl mead acid, heneicosane mead acid, behenyl mead acid, erucyl mead acid, lignoceryl mead acid, seryl mead acid, heptacosan-1-yl mead acid, montanyl mead acid, nonacosan-1-yl mead acid, myricyl mead acid, dotriacontan-1-yl mead acid, tetratriacontan-1-yl mead acid, and the like;
arachidonic acids such as lauryl arachidonate, tridecyl arachidonate, myristyl arachidonate, pentadecyl arachidonate, hexadecan-1-yl arachidonate, palmitrail arachidonate, heptadecan-1-yl arachidonate, stearyl arachidonate, isostearyl arachidonate, elaidyl arachidonate, oleyl arachidonate, linoleyl arachidonate, elidelinoleyl arachidonate, ricinoleyl arachidonate, nonadecyl arachidonate, arachidyl arachidonate, heneicosane arachidonate, behenyl arachidonate, erucyl arachidonate, lignoceryl arachidonate, seryl arachidonate, heptacosan-1-yl arachidonate, montanyl arachidonate, nonacosan-1-yl arachidonate, myricyl arachidonate, dotriacontan-1-yl arachidonate, tetratriacontan-1-yl arachidonate, and the like;
behenic acids such as lauryl behenate, tridecyl behenate, myristyl behenate, pentadecyl behenate, hexadecan-1-yl behenate, palmitrail behenate, heptadecan-1-yl behenate, stearyl behenate, isostearyl behenate, elaidyl behenate, oleyl behenate, linoleyl behenate, elidelinoleyl behenate, ricinoleyl behenate, nonadecyl behenate, arachidyl behenate, heneicosane behenate, behenyl behenate, erucyl behenate, lignoceryl behenate, seryl behenate, heptacosan-1-yl behenate, montanyl behenate, nonacosan-1-yl behenate, myricyl behenate, dotriacontan-1-yl behenate, tetratriacontan-1-yl behenate, and the like;
tricosylic acids such as lauryl tricosylate, tridecyl tricosylate, myristyl tricosylate, pentadecyl tricosylate, hexadecan-1-yl tricosylate, palmitrail tricosylate, heptadecan-1-yl tricosylate, stearyl tricosylate, isostearyl tricosylate, elaidyl tricosylate, oleyl tricosylate, linoleyl tricosylate, elidelinoleyl tricosylate, ricinoleyl tricosylate, nonadecyl tricosylate, arachidyl tricosylate, heneicosane tricosylate, behenyl tricosylate, erucyl tricosylate, lignoceryl tricosylate, seryl tricosylate, heptacosan-1-yl tricosylate, montanyl tricosylate, nonacosan-1-yl tricosylate, myricyl tricosylate, dotriacontan-1-yl tricosylate, tetratriacontan-1-yl tricosylate, and the like;
lignoceric acids such as lauryl lignocerate, tridecyl lignocerate, myristyl lignocerate, pentadecyl lignocerate, hexadecan-1-yl lignocerate, palmitrail lignocerate, heptadecan-1-yl lignocerate, stearyl lignocerate, isostearyl lignocerate, elaidyl lignocerate, oleyl lignocerate, linoleyl lignocerate, elidelinoleyl lignocerate, ricinoleyl lignocerate, nonadecyl lignocerate, arachidyl lignocerate, heneicosane lignocerate, behenyl lignocerate, erucyl lignocerate, lignoceryl lignocerate, seryl lignocerate, heptacosan-1-yl lignocerate, montanyl lignocerate, nonacosan-1-yl lignocerate, myricyl lignocerate, dotriacontan-1-yl lignocerate, tetratriacontan-1-yl lignocerate, and the like;
nervonic acids such as lauryl nervonate, tridecyl nervonate, myristyl nervonate, pentadecyl nervonate, hexadecan-1-yl nervonate, palmitrail nervonate, heptadecan-1-yl nervonate, stearyl nervonate, isostearyl nervonate, elaidyl nervonate, oleyl nervonate, linoleyl nervonate, elidelinoleyl nervonate, ricinoleyl nervonate, nonadecyl nervonate, arachidyl nervonate, heneicosane nervonate, behenyl nervonate, erucyl nervonate, lignoceryl nervonate, seryl nervonate, heptacosan-1-yl nervonate, montanyl nervonate, nonacosan-1-yl nervonate, myricyl nervonate, dotriacontan-1-yl nervonate, tetratriacontan-1-yl nervonate, and the like;
pentacosanoic acids such as lauryl pentacosanoate, tridecyl pentacosanoate, myristyl pentacosanoate, pentadecyl pentacosanoate, hexadecan-1-yl pentacosanoate, palmitrail pentacosanoate, heptadecan-1-yl pentacosanoate, stearyl pentacosanoate, isostearyl pentacosanoate, elaidyl pentacosanoate, oleyl pentacosanoate, linoleyl pentacosanoate, elidelinoleyl pentacosanoate, ricinoleyl pentacosanoate, nonadecyl pentacosanoate, arachidyl pentacosanoate, heneicosane pentacosanoate, behenyl pentacosanoate, erucyl pentacosanoate, lignoceryl pentacosanoate, seryl pentacosanoate, heptacosan-1-yl pentacosanoate, montanyl pentacosanoate, nonacosan-1-yl pentacosanoate, myricyl pentacosanoate, dotriacontan-1-yl pentacosanoate, tetratriacontan-1-yl pentacosanoate, and the like;
cerotic acids such as lauryl cerotate, tridecyl cerotate, myristyl cerotate, pentadecyl cerotate, hexadecan-1-yl cerotate, palmitrail cerotate, heptadecan-1-yl cerotate, stearyl cerotate, isostearyl cerotate, elaidyl cerotate, oleyl cerotate, linoleyl cerotate, elidelinoleyl cerotate, ricinoleyl cerotate, nonadecyl cerotate, arachidyl cerotate, heneicosane cerotate, behenyl cerotate, erucyl cerotate, lignoceryl cerotate, seryl cerotate, heptacosan-1-yl cerotate, montanyl cerotate, nonacosan-1-yl cerotate, myricyl cerotate, dotriacontan-1-yl cerotate, tetratriacontan-1-yl cerotate, and the like;
heptacosanoic acids such as lauryl heptacosanoate, tridecyl heptacosanoate, myristyl heptacosanoate, pentadecyl heptacosanoate, hexadecan-1-yl heptacosanoate, palmitrail heptacosanoate, heptadecan-1-yl heptacosanoate, stearyl heptacosanoate, isostearyl heptacosanoate, elaidyl heptacosanoate, oleyl heptacosanoate, linoleyl heptacosanoate, elidelinoleyl heptacosanoate, ricinoleyl heptacosanoate, nonadecyl heptacosanoate, arachidyl heptacosanoate, heneicosane heptacosanoate, behenyl heptacosanoate, erucyl heptacosanoate, lignoceryl heptacosanoate, seryl heptacosanoate, heptacosan-1-yl heptacosanoate, montanyl heptacosanoate, nonacosan-1-yl heptacosanoate, myricyl heptacosanoate, dotriacontan-1-yl heptacosanoate, tetratriacontan-1-yl heptacosanoate, and the like;
montanic acids such as lauryl montanate, tridecyl montanate, myristyl montanate, pentadecyl montanate, hexadecan-1-yl montanate, palmitrail montanate, heptadecan-1-yl montanate, stearyl montanate, isostearyl montanate, elaidyl montanate, oleyl montanate, linoleyl montanate, elidelinoleyl montanate, ricinoleyl montanate, nonadecyl montanate, arachidyl montanate, heneicosane montanate, behenyl montanate, erucyl montanate, lignoceryl montanate, seryl montanate, heptacosan-1-yl montanate, montanyl montanate, nonacosan-1-yl montanate, myricyl montanate, dotriacontan-1-yl montanate, tetratriacontan-1-yl montanate, and the like;
nonacosanoic acids such as lauryl nonacosanoate, tridecyl nonacosanoate, myristyl nonacosanoate, pentadecyl nonacosanoate, hexadecan-1-yl nonacosanoate, palmitrail nonacosanoate, heptadecan-1-yl nonacosanoate, stearyl nonacosanoate, isostearyl nonacosanoate, elaidyl nonacosanoate, oleyl nonacosanoate, linoleyl nonacosanoate, elidelinoleyl nonacosanoate, ricinoleyl nonacosanoate, nonadecyl nonacosanoate, arachidyl nonacosanoate, heneicosane nonacosanoate, behenyl nonacosanoate, erucyl nonacosanoate, lignoceryl nonacosanoate, seryl nonacosanoate, heptacosan-1-yl nonacosanoate, montanyl nonacosanoate, nonacosan-1-yl nonacosanoate, myricyl nonacosanoate, dotriacontan-1-yl nonacosanoate, tetratriacontan-1-yl nonacosanoate, and the like;
melissic acids such as lauryl melissate, tridecyl melissate, myristyl melissate, pentadecyl melissate, hexadecan-1-yl melissate, palmitrail melissate, heptadecan-1-yl melissate, stearyl melissate, isostearyl melissate, elaidyl melissate, oleyl melissate, linoleyl melissate, elidelinoleyl melissate, ricinoleyl melissate, nonadecyl melissate, arachidyl melissate, heneicosane melissate, behenyl melissate, erucyl melissate, lignoceryl melissate, seryl melissate, heptacosan-1-yl melissate, montanyl melissate, nonacosan-1-yl melissate, myricyl melissate, dotriacontan-1-yl melissate, tetratriacontan-1-yl melissate, and the like;
hentriacontanoic acids such as lauryl hentriacontanoate, tridecyl hentriacontanoate, myristyl hentriacontanoate, pentadecyl hentriacontanoate, hexadecan-1-yl hentriacontanoate, palmitrail hentriacontanoate, heptadecan-1-yl hentriacontanoate, stearyl hentriacontanoate, isostearyl hentriacontanoate, elaidyl hentriacontanoate, oleyl hentriacontanoate, linoleyl hentriacontanoate, elidelinoleyl hentriacontanoate, ricinoleyl hentriacontanoate, nonadecyl hentriacontanoate, arachidyl hentriacontanoate, heneicosane hentriacontanoate, behenyl hentriacontanoate, erucyl hentriacontanoate, lignoceryl hentriacontanoate, seryl hentriacontanoate, heptacosan-1-yl hentriacontanoate, montanyl hentriacontanoate, nonacosan-1-yl hentriacontanoate, myricyl hentriacontanoate, dotriacontan-1-yl hentriacontanoate, tetratriacontan-1-yl hentriacontanoate, and the like;
dotriacontanoic acids such as lauryl dotriacontanoate, tridecyl dotriacontanoate, myristyl dotriacontanoate, pentadecyl dotriacontanoate, hexadecan-1-yl dotriacontanoate, palmitrail dotriacontanoate, heptadecan-1-yl dotriacontanoate, stearyl dotriacontanoate, isostearyl dotriacontanoate, elaidyl dotriacontanoate, oleyl dotriacontanoate, linoleyl dotriacontanoate, elidelinoleyl dotriacontanoate, ricinoleyl dotriacontanoate, nonadecyl dotriacontanoate, arachidyl dotriacontanoate, heneicosane dotriacontanoate, behenyl dotriacontanoate, erucyl dotriacontanoate, lignoceryl dotriacontanoate, seryl dotriacontanoate, heptacosan-1-yl dotriacontanoate, montanyl dotriacontanoate, nonacosan-1-yl dotriacontanoate, myricyl dotriacontanoate, dotriacontan-1-yl dotriacontanoate, tetratriacontan-1-yl dotriacontanoate, and the like;
tritriacontanoic acids such as lauryl tritriacontanoate, tridecyl tritriacontanoate, myristyl tritriacontanoate, pentadecyl tritriacontanoate, hexadecan-1-yl tritriacontanoate, palmitrail tritriacontanoate, heptadecan-1-yl tritriacontanoate, stearyl tritriacontanoate, isostearyl tritriacontanoate, elaidyl tritriacontanoate, oleyl tritriacontanoate, linoleyl tritriacontanoate, elidelinoleyl tritriacontanoate, ricinoleyl tritriacontanoate, nonadecyl tritriacontanoate, arachidyl tritriacontanoate, heneicosane tritriacontanoate, behenyl tritriacontanoate, erucyl tritriacontanoate, lignoceryl tritriacontanoate, seryl tritriacontanoate, heptacosan-1-yl tritriacontanoate, montanyl tritriacontanoate, nonacosan-1-yl tritriacontanoate, myricyl tritriacontanoate, dotriacontan-1-yl tritriacontanoate, tetratriacontan-1-yl tritriacontanoate, and the like;
tetratriacontanoic acids such as lauryl tetratriacontanoate, tridecyl tetratriacontanoate, myristyl tetratriacontanoate, pentadecyl tetratriacontanoate, hexadecan-1-yl tetratriacontanoate, palmitrail tetratriacontanoate, heptadecan-1-yl tetratriacontanoate, stearyl tetratriacontanoate, isostearyl tetratriacontanoate, elaidyl tetratriacontanoate, oleyl tetratriacontanoate, linoleyl tetratriacontanoate, elidelinoleyl tetratriacontanoate, ricinoleyl tetratriacontanoate, nonadecyl tetratriacontanoate, arachidyl tetratriacontanoate, heneicosane tetratriacontanoate, behenyl tetratriacontanoate, erucyl tetratriacontanoate, lignoceryl tetratriacontanoate, seryl tetratriacontanoate, heptacosan-1-yl tetratriacontanoate, montanyl tetratriacontanoate, nonacosan-1-yl tetratriacontanoate, myricyl tetratriacontanoate, dotriacontan-1-yl tetratriacontanoate, tetratriacontan-1-yl tetratriacontanoate, and the like;
pentatriacontanoic acids such as lauryl pentatriacontanoate, tridecyl pentatriacontanoate, myristyl pentatriacontanoate, pentadecyl pentatriacontanoate, hexadecan-1-yl pentatriacontanoate, palmitrail pentatriacontanoate, heptadecan-1-yl pentatriacontanoate, stearyl pentatriacontanoate, isostearyl pentatriacontanoate, elaidyl pentatriacontanoate, oleyl pentatriacontanoate, linoleyl pentatriacontanoate, elidelinoleyl pentatriacontanoate, ricinoleyl pentatriacontanoate, nonadecyl pentatriacontanoate, arachidyl pentatriacontanoate, heneicosane pentatriacontanoate, behenyl pentatriacontanoate, erucyl pentatriacontanoate, lignoceryl pentatriacontanoate, seryl pentatriacontanoate, heptacosan-1-yl pentatriacontanoate, montanyl pentatriacontanoate, nonacosan-1-yl pentatriacontanoate, myricyl pentatriacontanoate, dotriacontan-1-yl pentatriacontanoate, tetratriacontan-1-yl pentatriacontanoate, and the like;
hexatriacontanoic acids such as lauryl hexatriacontanoate, tridecyl hexatriacontanoate, myristyl hexatriacontanoate, pentadecyl hexatriacontanoate, hexadecan-1-yl hexatriacontanoate, palmitrail hexatriacontanoate, heptadecan-1-yl hexatriacontanoate, stearyl hexatriacontanoate, isostearyl hexatriacontanoate, elaidyl hexatriacontanoate, oleyl hexatriacontanoate, linoleyl hexatriacontanoate, elidelinoleyl hexatriacontanoate, ricinoleyl hexatriacontanoate, nonadecyl hexatriacontanoate, arachidyl hexatriacontanoate, heneicosane hexatriacontanoate, behenyl hexatriacontanoate, erucyl hexatriacontanoate, lignoceryl hexatriacontanoate, seryl hexatriacontanoate, heptacosan-1-yl hexatriacontanoate, montanyl hexatriacontanoate, nonacosan-1-yl hexatriacontanoate, myricyl hexatriacontanoate, dotriacontan-1-yl hexatriacontanoate, tetratriacontan-1-yl hexatriacontanoate, and the like;
heptatriacontanoic acids such as lauryl heptatriacontanoate, tridecyl, heptatriacontanoate, myristyl heptatriacontanoate, pentadecyl heptatriacontanoate, hexadecan-1-yl heptatriacontanoate, palmitrail heptatriacontanoate, heptadecan-1-yl heptatriacontanoate, stearyl heptatriacontanoate, isostearyl heptatriacontanoate, elaidyl heptatriacontanoate, oleyl heptatriacontanoate, linoleyl heptatriacontanoate, elidelinoleyl heptatriacontanoate, ricinoleyl heptatriacontanoate, nonadecyl heptatriacontanoate, arachidyl heptatriacontanoate, heneicosane heptatriacontanoate, behenyl heptatriacontanoate, erucyl heptatriacontanoate, lignoceryl heptatriacontanoate, seryl heptatriacontanoate, heptacosan-1-yl heptatriacontanoate, montanyl heptatriacontanoate, nonacosan-1-yl heptatriacontanoate, myricyl heptatriacontanoate, dotriacontan-1-yl heptatriacontanoate, tetratriacontan-1-yl heptatriacontanoate, and the like;
octatriacontanoic acids such as lauryl octatriacontanoate, tridecyl octatriacontanoate, myristyl octatriacontanoate, pentadecyl octatriacontanoate, hexadecan-1-yl octatriacontanoate, palmitrail octatriacontanoate, heptadecan-1-yl octatriacontanoate, stearyl octatriacontanoate, isostearyl octatriacontanoate, elaidyl octatriacontanoate, oleyl octatriacontanoate, linoleyl octatriacontanoate, elidelinoleyl octatriacontanoate, ricinoleyl octatriacontanoate, nonadecyl octatriacontanoate, arachidyl octatriacontanoate, heneicosane octatriacontanoate, behenyl octatriacontanoate, erucyl octatriacontanoate, lignoceryl octatriacontanoate, seryl octatriacontanoate, heptacosan-1-yl octatriacontanoate, montanyl octatriacontanoate, nonacosan-1-yl octatriacontanoate, myricyl octatriacontanoate, dotriacontan-1-yl octatriacontanoate, tetratriacontan-1-yl octatriacontanoate, and the like;
nonatriacontanoic acids such as lauryl nonatriacontanoate, tridecyl nonatriacontanoate, myristyl nonatriacontanoate, pentadecyl nonatriacontanoate, hexadecan-1-yl nonatriacontanoate, palmitrail nonatriacontanoate, heptadecan-1-yl nonatriacontanoate, stearyl nonatriacontanoate, isostearyl nonatriacontanoate, elaidyl nonatriacontanoate, oleyl nonatriacontanoate, linoleyl nonatriacontanoate, elidelinoleyl nonatriacontanoate, ricinoleyl nonatriacontanoate, nonadecyl nonatriacontanoate, arachidyl nonatriacontanoate, heneicosane nonatriacontanoate, behenyl nonatriacontanoate, erucyl nonatriacontanoate, lignoceryl nonatriacontanoate, seryl nonatriacontanoate, heptacosan-1-yl nonatriacontanoate, montanyl nonatriacontanoate, nonacosan-1-yl nonatriacontanoate, myricyl nonatriacontanoate, dotriacontan-1-yl nonatriacontanoate, tetratriacontan-1-yl nonatriacontanoate, and the like; and,
tetracontanoic acids such as lauryl tetracontanoate, tridecyl tetracontanoate, myristyl tetracontanoate, pentadecyl tetracontanoate, hexadecan-1-yl tetracontanoate, palmitrail tetracontanoate, heptadecan-1-yl tetracontanoate, stearyl tetracontanoate, isostearyl tetracontanoate, elaidyl tetracontanoate, oleyl tetracontanoate, linoleyl tetracontanoate, elidelinoleyl tetracontanoate, ricinoleyl tetracontanoate, nonadecyl tetracontanoate, arachidyl tetracontanoate, heneicosane tetracontanoate, behenyl tetracontanoate, erucyl tetracontanoate, lignoceryl tetracontanoate, seryl tetracontanoate, heptacosan-1-yl tetracontanoate, montanyl tetracontanoate, nonacosan-1-yl tetracontanoate, myricyl tetracontanoate, dotriacontan-1-yl tetracontanoate, tetratriacontan-1-yl tetracontanoate, and the like.

Among these, palmitic acids, stearic acids, arachidic acids, behenic acids, tricosylic acids, lignoceric acids, pentacosanoic acids, cerotic acids, heptacosanoic acids, montanic acids, nonacosanoic acids, melissic acids, hentriacontanoic acids, dotriacontanoic acids, and tritriacontanoic acids are preferred. In particular, montanyl palmitate, myricyl palmitate, dotriacontan-1-yl palmitate, tetratriacontan-1-yl palmitate, stearyl stearate, montanyl stearate, myricyl stearate, dotriacontan-1-yl, stearate, tetratriacontan-1-yl stearate, montanyl arachidate, myricyl arachidate, dotriacontan-1-yl arachidate, tetratriacontan-1-yl arachidate, behenyl behenate, lignoceryl behenate, seryl behenate, montanyl behenate, myricyl behenate, dotriacontan-1-yl behenate, tetratriacontan-1-yl behenate, montanyl tricosylate, myricyl tricosylate, dotriacontan-1-yl tricosylate, tetratriacontan-1-yl tricosylate, lignoceryl lignocerate, seryl lignocerate, montanyl lignoserate, myricyl lignocerate, dotriacontan-1-yl lignoserate, tetratriacontan-1-yl lignoserate, montanyl pentacosanoate, myricyl pentacosanoate, dotriacontan-1-yl pentacosanoate, tetratriacontan-1-yl pentacosanoate, montanyl cerotate, myricyl cerotate, dotriacontan-1-yl cerotate, tetratriacontan-1-yl cerotate , montanyl heptacosanoate, myricyl heptacosanoate, dotriacontan-1-yl heptacosanoate, tetratriacontan-1-yl heptacosanoate, montanyl montanate, myricyl montanate, dotriacontan-1-yl montanate, tetracontan-1-yl montanate, montanyl nonacosanoate, myricyl nonacosanoate, dotriacontan-1-yl nonacosanoate, tetratriacontan-1-yl nonacosanoate, montanyl melissate, myricyl melissate, dotriacontan-1-yl melissate, tetratriacontan-1-yl melissate, montanyl hentriacontanoate, myricyl hentriacontanoate, dotriacontan-1-yl hentriacontanoate, tetratria.contan-1-yl hentriacontanoate, montanyl dotriacontanoate, myricyl dotriacontanoate, dotriacontan-1-yl dotriacontanoate, tetratriacontan-1-yl dotriacontanoate, montanyl tritriacontanoate, myricyl tritriacontanoate, dotriacontan-1-yl tritriacontanoate, and tetratriacontan-1-yl tritriacontanoate are preferred.

The number of carbon atoms in the above ester compounds is usually 22 to 80, preferably 26 to 76, more preferably 32 to 74, and particularly preferably 38 to 70.

When the number of carbon atoms is large, water-and oil-resistance tends to be excellent when the aqueous dispersion is coated on a substrate. When the number of carbon atoms is small, dispersibility of the wax in water tends to be excellent.

These wax components (C) may be used alone, or two or more of the same or different waxes may be used in combination. Also, for example, a mixture of multiple compounds may be used, such as a natural wax whose main component is the fatty acid ester compounds.

### [Anionic surfactant (D)]

The aqueous dispersion of the present invention preferably further contains an anionic surfactant (D) (hereinafter, sometimes referred to as "component (D)") in addition to the above components (A) to (C).

The anionic surfactant (D) may be a known general anionic surfactant. Examples thereof include fatty acid metal salts, sulfonic acid metal salts, sulfuric acid ester salts, and phosphoric acid metal salts.

Among those described above, fatty acid metal salts are preferable because they have high aqueous dispersion stability and can easily reduce the viscosity of the aqueous dispersion.

The carbon number of the fatty acid metal salt is preferably 6 to 30, and more preferably 10 to 28. When the carbon number of the fatty acid metal salt is large, the viscosity reducing effect tends to be sufficient. On the other hand, when the carbon number is small, the metal salt tends to be easily available.

The fatty acid may be linear or branched, and may have a hydroxyl group.

As the metal salt, an alkali metal salt is preferred, and a sodium salt is particularly preferred.

Examples of the fatty acid metal salt include sodium melissate, sodium montanate, sodium cerotate, sodium lignocerate, sodium behenate, sodium arachidate, sodium arachidonate, sodium stearate, potassium stearate, sodium oleate, sodium 12-hydroxystearate, sodium palmitate, sodium myristate, sodium laurate, sodium caprate, sodium octoate, sodium hexanoate, and the like.

Among these fatty acid metal salts, sodium montanate, sodium behenate, sodium stearate, sodium 12-hydroxystearate, sodium oleate, and sodium laurate are preferred because they are easily effective.

These anionic surfactants (D) may be used alone or in combination of two or more at any ratio.

### [Water]

The water used in the aqueous dispersion of the present invention may be any water that does not react with the components in the aqueous dispersion to produce dispersion-inhibitory components, such as water insolubles. Examples include hard water, soft water, ion-exchanged water, and ultrapure water. When the aqueous dispersion of the present invention contains an anionic surfactant (D), it is preferable to use neutral or basic water in order to prevent the reaction with the anionic surfactant (D).

### [Content of each component]

The content of the nonionic surfactant (B) or the surfactant (B') in the aqueous dispersion of the present invention must be 0.1 to 200 parts by mass based on to 100 parts by mass of the binder resin (A), and is preferably 0.5 to 150 parts by mass, more preferably 1 to 120 parts by mass, particularly preferably 3 to 90 parts by mass, and most preferably 10 to 50 parts by mass. When the content of the nonionic surfactant (B) or the surfactant (B') relative to the binder resin (A) is low, the resulting coating film tends to have excellent heat-sealability. On the other hand, when the content is high, the resulting coating film tends to have excellent water-and oil-resistance.

The content of the nonionic surfactant (B) or the surfactant (B') in the present invention must be 2 parts by mass or more based on 100 parts by mass of the wax component (C), and is preferably 2 to 5000 parts by mass, more preferably 20 to 4500 parts by mass, even more preferably 100 to 4000 parts by mass, and most preferably 200 to 1500 parts by mass. When the content of the nonionic surfactant (B) or the surfactant (B') relative to the wax (C) is high, excellent oil-resistance and dispersion stability can be obtained. On the other hand, when the content of the nonionic surfactant (B) or the surfactant (B') is low, water-and oil-resistance tends to be excellent.

The content of the wax (C) in the aqueous dispersion of the present invention is preferably 0.1 to 40 parts by mass, more preferably 0.3 to 30 parts by mass, and even more preferably 0.5 to 20 parts by mass, based on 100 parts by mass of the binder resin (A). When the content of the wax (C) relative to the binder resin (A) is small, a particle size tends to be small and dispersion stability tends to be excellent. On the other hand, when the content is large, water-and oil-resistance of the resulting coating film tends to be excellent.

When the aqueous dispersion of the present invention contains the anionic surfactant (D), the content of the anionic surfactant (D) is preferably 0.5 to 50 parts by mass, more preferably 0.7 to 40 parts by mass, even more preferably 1 to 30 parts by mass, and particularly preferably 5 to 20 parts by mass, based on 100 parts by mass of the total of the nonionic surfactant (B) or the surfactant (B') and the anionic surfactant (D).

When the content of the anionic surfactant (D) is large, the effect to improving the dispersibility of the nonionic surfactant (B) or the surfactant (B') and the wax (C) in water is easily obtained sufficiently. On the other hand, when the content of the anionic surfactant (D) is small, the aqueous dispersion tends to have low viscosity and excellent fluidity.

The aqueous dispersion of the present invention preferably has the total content of the binder resin (A), the nonionic surfactant (B) or the surfactant (B') and the wax component (C) of 50% by mass or more relative to the components other than water. More preferably, it is 70% by mass or more. When the total content of the binder resin (A), the nonionic surfactant (B) or the surfactant (B') and the wax component (C) is large, the effects of the present invention by including these components can be effectively obtained.

### [Pulp fibers]

The aqueous dispersion of the present invention may further contain pulp fibers.

By including pulp fibers in the aqueous dispersion of the present invention, an entanglement with the pulp fibers is expected, and an effect of improving water-and oil-resistance is achieved.

Examples of the pulp fibers used in the aqueous dispersion of the present invention include, broadleaf tree pulps or coniferous tree pulps derived from wood sources, straw pulps, bagasse pulps, or kenaf pulps derived from non-wood sources, and the like. The fiber diameters range from those defibrated to the nano meter level to those on the order of several centimeters. The fiber lengths range also from those on the nano meter order to several centimeters. These pulp fibers may be used alone or in combination of two or more types in any ratio.

When the aqueous dispersion of the present invention contains the pulp fibers, the content of the pulp fibers is preferably 0.1 to 1000 times by mass, and more preferably 1 to 100 times by mass, based on the total amount of the binder resin (A), the nonionic surfactant (B) or the specific surfactant (B'), and the wax component (C). When the content of the pulp fibers is within these ranges, the above-mentioned effects due to the inclusion of the pulp fibers tend to be effectively obtained.

In the aqueous dispersion of the present invention, the water content is preferably high because the aqueous dispersion tends to have low viscosity and excellent fluidity. On the other hand, it is preferable that the water content is low because the aqueous dispersion tends to easily exhibit water-and oil-resistance and heat-sealability when coated on a substrate. From this perspective, the water content of the aqueous dispersion of the present invention is preferably 30% by mass or more, more preferably 40% by mass or more, and even more preferably 50% by mass or more, while it is preferably 99% by mass or less, more preferably 95° by mass or less, and even more preferably 90% by mass or less.

For the same reason, the solid content concentration in the aqueous dispersion of the present invention (the total amount of the components other than water contained in the aqueous dispersion of the present invention) is preferably low for the reason that the aqueous dispersion has low viscosity and excellent fluidity. Thus, the solid content concentration in the aqueous dispersion of the present invention is preferably 70 mass% or less, more preferably 65 mass% or less, and particularly preferably 50 mass% or less. On the other hand, from the viewpoint of ensuring the content of each component and from the viewpoint of ensuring film-forming properties, the solid content concentration in the aqueous dispersion of the present invention is preferably 17 by mass or more, more preferably 5% by mass or more, even more preferably 10% by mass or more, and particularly preferably 15% by mass or more.

### [Other Components]

In addition to the above-mentioned components, the aqueous dispersion of the present invention may contain other low-molecular and high-molecular emulsifiers, alcohol-based compounds, and the like, as long as the advantageous effects of the present invention are not impaired.

Specific examples of low-molecular emulsifier include nonionic low-molecular emulsifiers such as fatty acid diethanolamide, polyoxyethylene alkyl ether, polyoxyethylene alkyl phenyl ether, and the like, and anionic low-molecular emulsifiers such as α-sulfofatty acid ester salt, alkylbenzene sulfonate, alkyl sulfate, alkyl ether sulfate ester salt, triethanolamine alkyl sulfate, and the like.

Specific examples of high-molecular emulsifiers include nonionic polymer emulsifiers such as polyvinyl alcohol, polyoxyethylene alkyl ether, polyoxypropylene/polyoxyethylene block copolymers, polymer starch, and the like, and anionic polymer emulsifiers such as styrene/maleate copolymers, formalin bound naphthalene sulfonates, polyacrylates, carboxymethyl cellulose metal salts, olefin/maleate copolymers, polystyrene sulfonates, acrylamide/acrylate copolymers, alginates, and the like.

Specific examples of alcohol compounds include higher alcohols such as cetanol, stearyl alcohol, and the like; and, polyols such as (poly)ethylene glycol, (poly)propylene glycol, polytetramethylene ether glycol, polycarbonate diol, glycerin, trimethylolpropane, pentaerythritol, erythritol, sorbitol and isosorbide, and the like.

Among these, polyols such as (poly)ethylene glycol, (poly)propylene glycol, trimethylolpropane, polytetramethylene ether glycol, polycarbonate diol, glycerin, trimethylolpropane, pentaerythritol, sorbitol, isosorbide, and the like tend to have high dispersion stability and are therefore preferred.

The amount of these additives may be determined appropriately, but for example, it is preferably 50 parts by mass or less, and particularly preferably 30 parts by mass or less, based on 100 parts by mass of the total of the component (A), the component (B), the component (C) and the optional used component (D). When the amount of the additives is small, the viscosity and particle size of the dispersion tend to be small.

In addition to the above-mentioned components, the aqueous dispersion of the present invention may contain other additives such as antifoaming agents, preservatives, smoothing agents, antistatic agents, flame retardants, tackifiers, fillers, ultraviolet absorbers, colorants, antioxidants, functional dyes, inorganic particles, organic solvents, and the like, within the range that does not impair the effects of the present invention. The amount of these additives may be determined appropriately, but for example, it is preferably 10% by mass or less, and particularly preferably 5% by mass or less in the aqueous dispersion.

### [Viscosity]

The viscosity of the aqueous dispersion of the present invention is preferably low for the reason that the aqueous dispersion can be handled with excellent workability. Therefore, the viscosity of the aqueous dispersion of the present invention is preferably 5,000 mPa·s or less, more preferably 3,500 mPa·s or less, even more preferably 2,000 mPa·s or less, particularly preferably 1,000 mPa·s or less, and most preferably 500 mPa·s or less. From the viewpoint of improving coatability, the viscosity of the aqueous dispersion of the present invention is usually 0.1 mPa·s or more, preferably 1 mPa·s or more, and even more preferably 10 mPa·s or more.

The viscosity in the present invention is a value (unit: mPa·s) measured with a B-type viscometer at a temperature condition of 25°C and a shear rate of 100 rpm.

### [Average emulsion particle size]

The average emulsion particle size in the aqueous dispersion of the present invention is preferably small for the reason that the aqueous dispersion can be handled with excellent workability. Thus, the average emulsion particle size in the aqueous dispersion of the present invention is preferably less than 100 µm, more preferably 50 um or less, and still more preferably 1.0 um or less.

The average emulsion particle size in the present invention is a value (unit: um) measured with a laser diffractometer (laser diffraction scattering method) at a temperature condition of 25°C.

### [Method of producing aqueous dispersion]

The aqueous dispersion of the present invention may be produced in accordance with a known general method for producing an aqueous dispersion or an emulsion.

For example, a method of mixing each blending component in the following order can be mentioned.
i) A method of dispersing a nonionic surfactant and a wax component in water, and then blending a binder resin.
ii) A method of mixing a nonionic surfactant, a wax component, and a binder resin in advance, and then adding the mixture in water.
iii) A method of dispersing a binder resin in water, and then blending a nonionic surfactant and a wax component.

Among these method, the method i) is preferable from the viewpoints of workability and productivity.

The conditions for mixing each component are preferably as follows.

The mixing time in each step is preferably long for the reason that the components will be dispersed sufficiently in the liquid, and is preferably short for the reason that the productivity of the aqueous dispersion is enhanced. Thus, the mixing time is usually 10 minutes to 24 hours, and preferably 20 minutes to 6 hours.

The mixing temperature in each step is preferably a temperature at which water does not freeze or evaporate, and is usually 0 to 100°C, preferably 40 to 90°C.

When the system has been heated to room temperature or above, cooling is performed. The cooling may be performed by a common technique. For example, the system may be cooled rapidly by contact with a refrigerant or may be cooled naturally by contact with air environment. The cooling technique is selected in consideration of the production volume and the industrial efficiency of the aqueous dispersion that is produced.

The pressure in each step may be normal pressure or may be an increased or reduced pressure. The pressure is selected in accordance with properties of the aqueous dispersion that is produced (such as concentration, viscosity, particle size, and production volume) and the type of the dispersing method described below.

The components may be dispersed in water by any of general dispersing methods that apply a shear force, such as stirring, shaking, ultrasonication, and mechanical extrusion. The method is selected in accordance with properties of the aqueous dispersion that is produced (such as concentration, viscosity, particle size, and production volume).

### [Use applications]

The aqueous dispersion of the present invention is useful as an additive for such products as foods, cosmetics, and pharmaceuticals. In addition, the aqueous dispersion can find use in various applications, such as antifogging agents, antistatic agents, compatibilizers, paints, coating agents, agents for imparting water and oil resistance to paper, adhesives, dispersants for various organic and inorganic particles, and additives for thermoplastic resins and thermosetting resins.

The aqueous dispersion of the present invention is suited as a coating agent for various substrates. In particular, the aqueous dispersion is suited as a coating agent for packaging materials, such as food packaging materials. The aqueous dispersion of the present invention is also suitable as a water-and oil-resistant coating agent and a heat-sealable coating agent for various substrates.

The substrate to which the aqueous dispersion of the present invention is applied is preferably a paper substrate, a plastic substrate, a fiber substrate, or a wood substrate, and is preferably a paper substrate or a plastic substrate. The aqueous dispersion of the present invention is particularly preferably a coating agent for a paper substrate. For example, a paper product may be produced by coating or impregnating one or both sides of a paper substrate with the aqueous dispersion of the present invention to form a coating layer.

Furthermore, a paper product may be produced by mixing the aqueous dispersion of the present invention with a pulp slurry and papermaking.

Furthermore, the aqueous dispersion of the present invention may be applied to one or both sides of paper, a plastic substrate, or a wood substrate to form a laminated body having a coating layer formed from the aqueous dispersion.

The substrate in the laminated body will be described later.

### [Film]

With the aqueous dispersion of the present invention, a film can be formed on a substrate by volatilizing components, such as water, from the aqueous dispersion. That is, by using the aqueous dispersion 1 of the present invention, it is possible to obtain a film containing the binder resin (A), the nonionic surfactant (B), and the wax component (C), characterized in that the content of the nonionic surfactant (B) is 0.1 to 200 parts by mass based on 100 parts by mass of the binder resin (A), and 2 parts by mass or more based on 100 parts by mass of the wax component (C).

Also, by using the aqueous dispersion 2 of the present invention, it is possible to obtain a film containing the binder resin (A), the surfactant (B'), and the wax component (C), characterized in that the surfactant (B') contains at least one of sucrose fatty acid esters and sorbitan fatty acid esters, and the content of the surfactant (B') is 0.1 to 200 parts by mass based on 100 parts by mass of the binder resin (A), and 2 parts by mass or more based on 100 parts by mass of the wax component (C) .

A film according to another embodiment of the present invention is a film containing the binder resin (A), the surfactant (B), and the wax component (C), and is characterized by containing a phase (X) having birefringence in the film. This film can also be obtained using the aqueous dispersion of the present invention.

The phase (X) having birefringence (hereinafter sometimes simply referred to as "birefringent phase") in the film is a phase obtained by the surfactant (B) forming a liquid crystal structure such as a lamellar phase. When a coated film (coating film) having the birefringent phase (X) of the present invention is observed with a polarizing microscope, interference fringes and particles having optical anisotropy are confirmed.

By containing such birefringent phase (X) in the film, it is possible to obtain a coating film having excellent water-and oil-resistance.

A film according to yet another embodiment of the present invention is a film containing the binder resin (A), the surfactant (B), and the wax component (C), characterized in that the surface of the film has a surface roughness Ra of 10 to 100 nm as measured by a scanning probe microscope method. This film can also be obtained using the aqueous dispersion of the present invention.

When the surface roughness Ra of the film of the present invention is 1 nm or more, excellent water-and oil-resistance can be expected due to the lotus effect. On the other hand, when the surface roughness Ra is 200 nm or less, the effects of the present invention are easily manifested. From these viewpoints, the surface roughness Ra of the film of the present invention is more preferably 1 to 200 nm, and even more preferably 3 to 150 nm.

Here, the components and compositions in the film of the present invention are the same as the components other than water and their compositions of the aqueous dispersion of the present invention described above.

The thickness of the film of the present invention is preferably large for the reasons that the film will reliably coat the substrate, and the film has high strength and resists chipping due to friction or the like. On the other hand, the thickness of the film is preferably small for the reasons that the film ingredient costs can be saved and the film will not be easily separated from the substrate when a force is applied. Thus, the thickness of the film of the present invention is preferably 0.1 µm or more, more preferably 0.2 um or more, still more preferably 0.5 µm or more, and is preferably 30 µm or less, more preferably 25 um or less, still more preferably 20 um or less, and particularly preferably 15 µm or less. That is, the thickness of the film of the present invention is preferably 0.1 to 30 µm, more preferably 0.2 to 20 µm, and still more preferably 0.5 to 15 µm.

The coating amount of the film of the present invention is preferably large for the reasons that the film will reliably coat the substrate, and the film has high strength and resists chipping due to friction or the like. On the other hand, the coating amount of the film is preferably small for the reasons that the film ingredient costs can be saved and the film will not be easily separated from the substrate when a force is applied. Therefore, the coating amount of the film of the present invention is preferably 0.1 to 100 g/m², more preferably 0.5 to 50 g/m², and particularly preferably 1 to 30 g/m², in terms of the amount of solids after removing volatile matters such as water.

The film of the present invention is excellent in water-and oil-resistance and heat-sealability. That is, the film of the present invention is suitable for a water and oil resistant film and a heat seal film. Furthermore, since the film of the present invention is excellent in water-and oil-resistance and heat-sealability, it is preferably used for packaging material applications, and since it is also excellent in safety, it is more preferably used for food packaging material applications. That is, a packaging material having the film of the present invention and a food packaging material having the film of the present invention can be obtained.

### [Laminated body]

The film of the present invention can be obtained using the aqueous dispersion of the present invention. By laminating the film of the present invention onto a substrate, the laminated body of the present invention can be obtained. That is, the laminated body can be obtained having a coating film formed on the surface of the substrate using the aqueous dispersion of the present invention. Here, the substrate is preferably paper, plastic, fiber, and the like. That is, the laminated body can be obtained that includes a substrate including at least one substrate of paper, plastic, and wood, and the film of the present invention.

Examples of the paper substrates include woodfree paper, medium grade paper, coated paper, foil paper, glassine paper, paraffin paper, parchment paper, and the like.

Examples of the plastic substrates include polyethylene, polypropylene, polyethylene terephthalate, polyethylene naphthalate, vinyl chloride, polystyrene, acrylic, polycarbonate, polyphenylene sulfide, fluororesin, polyether ether ketone, polyethersulfone, aramid, polyimide, polyamide, cellophane, triacetylcellulose, and the like.

Examples of the fiber include natural fibers such as cotton, silk, linen, wool, cashmere, and the like, regenerated fibers such as rayon, and the like, and synthetic fibers such as polyester fibers, nylon fibers, acrylic fibers, polyurethane fibers, and the like.

Among those described above, paper substrates, cellophane, and triacetylcellulose are preferred, and paper is particularly preferred, because these substrates have high affinity for water and are easy to coat with the aqueous dispersion.

### Example

The present invention will be described in greater detail below by way of Examples. The present invention is not limited to the following Examples as long as the present invention does not depart from the spirit thereof. References to "parts" indicate parts by mass.

### [Evaluation methods]

The aqueous dispersions prepared in EXAMPLES and COMPARATIVE EXAMPLES were evaluated as follows.

Glassine paper (basis weight: 25.8 g/m2, manufactured by SHIMOJIMA CO., Ltd.) was used as a paper substrate.

### <Viscosity of aqueous dispersion>

The viscosity of the prepared aqueous dispersion was measured one day after preparation and was evaluated according to the criteria below. The viscosity was measured using a B-type viscometer at a temperature of 25°C and a shear rate of 100 rpm (unit: mPa·s).

### (Evaluation criteria)

- ○: 1000 mPa·s or less
- △: Higher than 1000 mPa·s and lower than 5000 mPa·s
- ×: 5000 mPa·s or more

### <Average particle size in aqueous dispersion>

One day after preparation of the dispersion, the average emulsion particle size was measured at 25°C using a laser diffractometer ("Partica LA-950V2" manufactured by HORIBA, Ltd.).

### (Evaluation criteria)

- ○: 10 µm or less
- △: More than 10 µm and less than 30 µm
- ×: 30 µm or more

### <Water contact angle of coated paper>

2 µL of water was dropped onto the paper substrate coated with the prepared aqueous dispersion or toluene solution, and the water contact angle after 1 second was measured with a solid-liquid interface analyzer ("DropMaster 500" manufactured by Kyowa Interface Science Co., Ltd.) and was evaluated according to the criteria below.

The water contact angle of the paper substrate before being coated with the aqueous dispersion was 36.1°, and the rating was ×.

### (Evaluation criteria)

- ○: 95° or more
- △: More than 50° and less than 95°
- ×: 50° or less

### <Water-resistance of coated paper>

One droplet of water was dropped onto the paper substrate coated with the prepared aqueous dispersion or toluene solution. After prescribed amounts of time <1 minute intervals, maximum 10 minutes) at a temperature of 23°C, the water was wiped off and the surface of the coated paper was visually observed. When a water mark was found, the elapsed time 1 minute before that time was recorded and was evaluated according to the criteria below.

The water-resistance of the paper substrate before being coated with the aqueous dispersion was 0 min, and the rating was ×.

### (Evaluation criteria)

- ○: 10 min or more
- △: 1 min or more and less than 10 min
- ×: Less than 1 min

### <Water absorbing capacity of coated paper>

The water absorbing capacity of the paper substrate coated with the prepared aqueous dispersion or toluene solution was measured in accordance with JIS P8140: 1998. The test area was 100 cm², the contact time was 30 seconds, and the test temperature was 23°C. The water absorbing capacity was evaluated according to the criteria below.

The water absorbing capacity of the paper substrate before being coated with the aqueous dispersion was 16.7 g/m², and the rating was ×.

### (Evaluation criteria)

- ○: Less than 0.50 g/m²
- △: 0.50 or more and less than 1.0 g/m²
- ×: 1.0 g/m² or more

### <Oil-resistance of coated paper>

The oil-resistance of the paper substrate coated with the prepared aqueous dispersion or toluene solution was measured using a kit test (J.TAPPI No. 41). A test solution of kit numbers 1 to 12, consisting of castor oil, toluene, and n-heptane mixed in a specified volume ratio, was used, and one drop of this test solution was dropped onto the coated paper. 15 seconds after dropping, the dropped test solution was removed with clean blotting paper, and the surface of the coated paper was visually observed. The kit number one less than the kit number where oily bleeding occurred on the surface was recorded, and the result was evaluated according to the following criteria.

The kit number of the paper substrate before being coated with the aqueous dispersion was less than 1, and the rating was x.

### (Evaluation criteria)

○: Kit number 4 or more
△: Kit number 3
×: Kit number 2 or less

### CHeat-sealability of coated paper>

Using a heat sealer, the coated surfaces of the paper substrate coated with the prepared aqueous dispersion or toluene solution were brought into close contact with each other, and heat-sealed at temperature of 180°C for 1.2 seconds, and the result was evaluated according to the following criteria.

### (Evaluation criteria)

○: Sealed
×: Not sealed

### <Presence or absence of birefringent phase (X) in coating film>

The PET film coated with the prepared aqueous dispersion or toluene solution was visually observed under a polarizing microscope to confirm whether or not it had a birefringent phase (X), and the result was evaluated according to the following criteria.

### (Evaluation criteria)

∘: Birefringent phase (X) present in the coating film
×: No birefringent phase (X) present in the coating film

### [Raw materials]

The materials for each component used in the preparation of the aqueous dispersion in the Examples and Comparative Examples are as follows:

### <Binder resin (A)>

(A-1): Acrylic emulsion (product name: FILLHARMO (registered trademark) NS215, manufactured by Toyochem Corporation, solid content concentration 41% by mass)
(A-2): Styrene-acrylic emulsion (product name: FILLHARMO (registered trademark) GS500, manufactured by Toyochem Corporation, solid content concentration 45.5% by mass)
(A-3): Water-based polyester resin (product name: Nichigo-Polyester (registered trademark) WR-905, manufactured by Mitsubishi Chemical Corporation, solid content concentration 20% by mass)

### <Non ionic surfactant (B)>

(B-1): Stearic acid-based sucrose fatty acid ester (product name: Ryoto (registered trademark) Sugar Ester S-370, manufactured by Mitsubishi Chemical Corporation)
(B-2): Sorbitan monostearate (product name: Emazol S-10V, manufactured by Kao Corporation)

### <Wax (C)>

(C-1): Rice bran wax (product name: NatureFine R331, manufactured by DSP GOKYO FOOD & CHEMICAL Co., Ltd., melting point 77 to 82°C)
(C-2): Solid paraffin (manufactured by Kishida Chemical Co., Ltd., melting point 66 to 68°C)

### <Anionic surfactant (D)>

(D-1): Sodium stearate (product name: Sodium stearate (manufactured by Nitto Chemical Industry Co., Ltd.)

### <Other component (E)>

(E-1): Antifoaming agent (Product name: XIAMETER (registered trademark) ACP-1500, manufactured by Dow Toray Co., Ltd.)

### [Preparation of aqueous dispersion]

### <Examples 1-10 and Comparative Examples 2, 6-8>

Among the components shown in Tables 1-3, the components other than the component (A) were mixed in the amounts (parts) shown in Tables 1-3. The mixture was heated to 90°C and was stirred for 120 minutes. Subsequently, the mixture was rapidly cooled to 25°C in an ice bath to obtain an aqueous dispersion. The obtained aqueous dispersion was mixed with the components (A) shown in Tables 1-3 in the amounts (parts) shown in Tables 1-3 at normal temperature (23°C) to obtain the intended aqueous dispersion. The viscosity and average particle size of the obtained aqueous dispersion were measured, and the results are shown in Tables 1-3.

### <Comparative Examples 1, 4, 5>

Only the component (A) shown in Tables 2 and 3 was prepared into an aqueous dispersion, and the viscosity and average particle size were measured. The results are shown in Tables 2 and 3.

### [Preparation of toluene solution]

### <Comparative Example 3>

The component (B) shown in Table 2 and toluene were mixed in the ratio shown in Table 2 and heated to 40°C to obtain a toluene solution of the nonionic surfactant (B).

### [Coating and Evaluation]

The prepared aqueous dispersion or toluene solution was coated on a paper substrate, glassine paper (basis weight 25.8 g/m², produced by Shimojima Co., Ltd.), using an applicator (coating amount after drying: 10 g/m²) , and then heated and dried at 120°C for 5 minutes to obtain coated paper. The water contact angle, water-resistance, water absorbing capacity, oil-resistance, and heat-sealability of the obtained coated paper were measured, and the results are shown in Tables 1 to 3.

Furthermore, the prepared aqueous dispersion or toluene solution was coated onto a PET film (product name: Lumirror #25-T60, manufactured by Toray Industries, Inc.) using an applicator (coating amount after drying: 10 g/m²), and then heated and dried at 120°C for 5 minutes to obtain a PET film having a coating film. The obtained PET film having a coating film was observed with a polarizing microscope to confirm the presence or absence of the birefringent phase (X) of the coating film, and the results are shown in Tables 1 to 3.

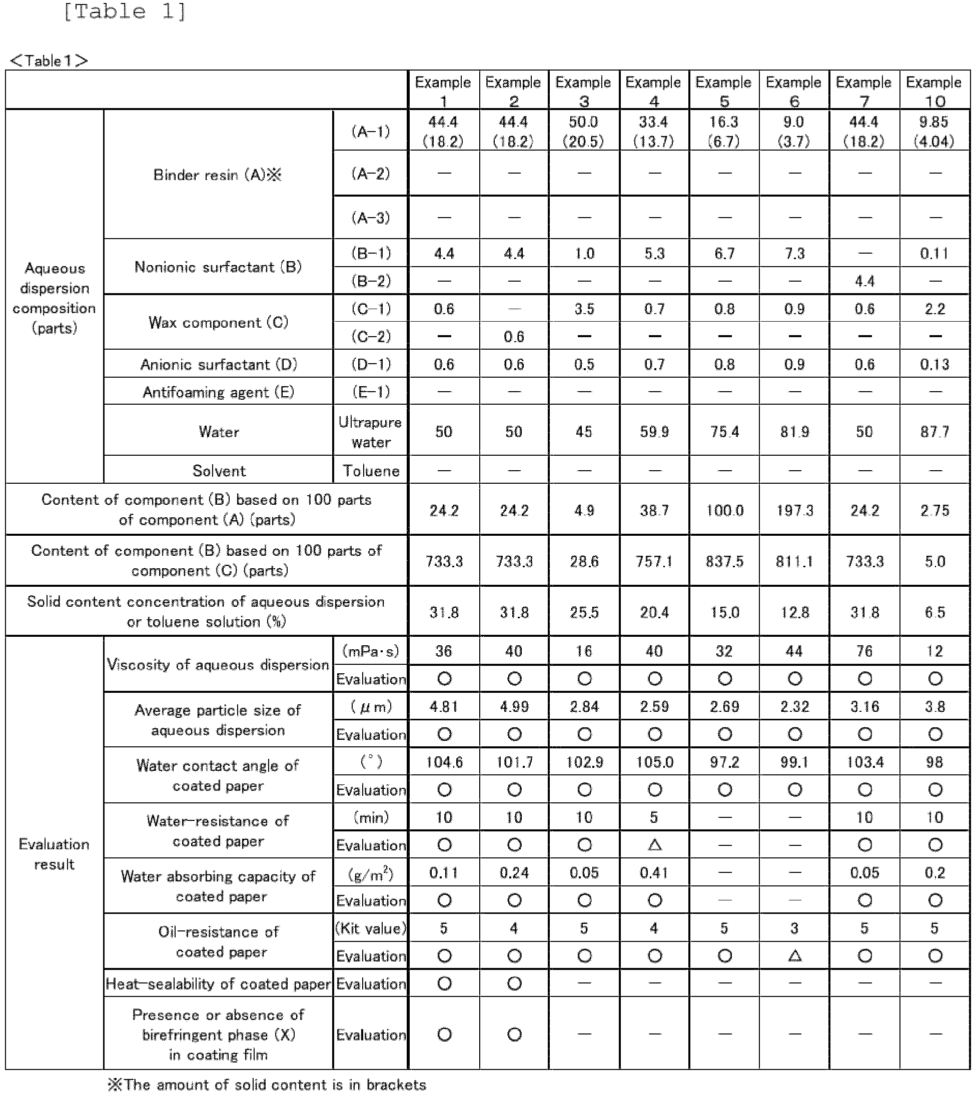

### [Table 2]

**<Table2>**

| | | | Comparative Example 1 | Comparative Example 2 | Comparative Example 3 | Comparative Example 6 | Comparative Example 7 | Comparative Example 8 |
|---|---|---|---|---|---|---|---|---|
| Aqueous dispersion composition (parts) | Binder resin (A) 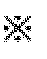 | (A-1) | 100 (41) | 46.8 (192) | - | 2.7 (1.1) | 49.6 (20.3) | 11.7 (4.8) |
| | | (A-2) | - | - | - | - | - | - |
| | | (A-3) | - | - | - | - | - | - |
| | Nonionic surfactant (B) | (B-1) | - | 4.8 | 20 | 0.27 | 0.008 | 12.3 |
| | | (B-2) | - | - | - | - | - | - |
| | Wax component (C) | (C-1) | - | - | - | 19.^{p} | 00012 | 1.68 |
| | | (C-2) | - | - | - | - | - | - |
| | Anionic surfactant (D) | (D-1) | - | 0.5 | - | 0.037 | 0.0012 | 1.68 |
| | Antifoaming agent (E) | (E-1) | - | - | - | - | - | - |
| | Water | Ultrapure water | - | 47.9 | - | 78.0 | 50.4 | 72.6 |
| | Solvent | Toluene | - | - | 80 | - | - | - |
| Content of component (B) based on 100 parts of component (A) (parts) | | | 0 | 25.0 | - | 24.2 | 0.04 | 255 |
| Content of component (B) based on 100 parts of component (C) (parts) | | | 0 | - | - | 1.4 | 733.3 | 733.3 |
| Solid content concentration of aqueous dispersion or toluene solution (%) | | | 41.0 | 32.9 | 20.0 | 20.4 | 20.3 | 20.5 |
| Evaluation result | Viscosity of aqueous dispersion | (mPa·s) | 292 | 24 | - | Phase separation | 8 | 88 |
| | | Evaluation | ○ | ○ | - | × | ○ | ○ |
| | Average particle size of aqueous dispersion | (*µ*m) | 1.39 | 1.39 | - | - | 0.7 | 0.9 |
| | | Evaluation | ○ | ○ | - | - | ○ | ○ |
| | Water contact angle of coated paper | (°) | 98.2 | 101.1 | 85.1 | - | 76 | 91 |
| | | Evaluation | ○ | ○ | △ | - | △ | △ |
| | Water-resistance of coated paper | (min) | 10 | 5 | <1 | - | 10 | <1 |
| | | Evaluation | ○ | △ | × | - | ○ | × |
| | Water absorbing capacity of coated paper | (g/m²) | 0.35 | 0.79 | 12 1 | - | - | 0.63 |
| | | Evaluation | ○ | △ | × | - | - | △ |
| | Oil-resistance of coated paper | (Kit value) | 2 | 1 | 4 | - | 3 | 5 |
| | | Evaluation | × | × | ○ | - | △ | ○ |
| | Heat-sealability of coated paper | Evaluation | ○ | ○ | × | - | - | - |
| | Presence or absence of birefringent phase (X) in coating film | Evaluation | × | × | - | - | - | - |

| | | | | | | | | |
|---|---|---|---|---|---|---|---|---|
| 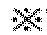 The amount of solid content is in brackets | | | | | | | | |

### [Table 3]

**<Table3>**

| | | | Example 8 | Comparative Example 4 | Example 9 | Comparative Example 5 |
|---|---|---|---|---|---|---|
| Aqueous dispersion composition (parts) | Binder resin (A) 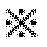 | (A-1) | - | - | - | - |
| | | (A-2) | 58.0 (26.4) | 100 (45.5) | - | - |
| | | (A-3) | - | - | 62.5 (12.5) | 100 (20.0) |
| | Nonionic surfactant (B) | (B-1) | 6.7 | - | 3.0 | - |
| | | (B-2) | - | - | - | - |
| | Wax component (C) | (C-1) | 0.4 | - | 0.4 | - |
| | | (C-2) | - | - | - | - |
| | Anionic surfactant (D) | (D-1) | 1.3 | - | 0.4 | - |
| | Antifoaming agent (E) | (E-1) | 0.04 | - | - | - |
| | Water | Ultrapure water | 33.5 | - | 83.8 | - |
| | Solvent | Toluene | - | - | - | - |
| Content of component (B) based on 100 parts of component (A) (parts) | | | 25.4 | 0 | 24.0 | 0 |
| Content of component (B) based on 100 parts of component (C) (parts) | | | 1675 | - | 750.0 | - |
| Solid content concentration of aqueous dispersion or toluene solution (%) | | | 34.8 | 45.5 | 16.2 | 20.0 |
| Evaluation result | Viscosity of aqueous dispersion | (mPa·s) | 40 | 176 | 50 | 50 |
| | | Evaluation | ○ | ○ | ○ | ○ |
| | Average particle size of aqueous dispersion | (*µ*m) | 0.23 | 0.17 | 2.36 | 2.36 |
| | | Evaluation | ○ | ○ | ○ | ○ |
| | Water contact angle of coated paper | (°) | 96.2 | 103 | 58.3 | 71.0 |
| | | Evaluation | ○ | ○ | △ | △ |
| | Water-resistance of coated paper | (min) | 10 | 5 | 1 | <1 |
| | | Evaluation | ○ | △ | △ | × |
| | Water absorbing capacity of coated paper | (g/m²) | 0.55 | - | 9.3 | 11.5 |
| | | Evaluation | Δ | - | x | × |
| | Oil-resistance of coated paper | (Kit value) | 3 | 0 | 12 | - |
| | | Evaluation | △ | × | ○ | - |
| | Heat-sealability of coated paper | Evaluation | - | - | - | - |
| | Presence or absence of birefringent phase (X) in coating film | Evaluation | - | - | - | - |

| | | | | | | |
|---|---|---|---|---|---|---|
| 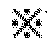 The amount of solid content is in brackets | | | | | | |

From Tables 1 to 3 above, it was confirmed that Examples 1 to 10 had low water absorbing capacity and high water-resistance, as well as high oil-resistance. In other words, it was confirmed that the film prepared using the aqueous dispersion of the present invention has water-and oil-resistance. Furthermore, it was confirmed from Examples 1 and 2 that the film also has heat-sealability.

In Examples 1 and 2, the coating film had a birefringent phase (X). In contrast, when the aqueous dispersion of the binder resin as in Comparative Example 1 and the aqueous dispersion to which the wax (C) is not added as in Comparative Example 2 were coated on the paper substrate, it was confirmed that these coating film did not have a birefringent phase (X), and had high water absorbing capacity, low water-resistance, and low oil resistance. In other words, it was confirmed that the film containing the birefringent phase (X) has water-and oil-resistance and heat-sealability.

On the other hand, in Comparative Example 3, when only the surfactant (B) component was coated, it was confirmed that the film had high water absorbing capacity, low water-resistance, and no heat-sealability. Comparative Example 6, in which the content of the surfactant (B) component relative to the wax component (C) was outside the range of the aqueous dispersion of the present invention (low), showed phase separation. Comparative Example 8, in which the content of the surfactant (B) component relative to the binder resin (A) was outside the range of the aqueous dispersion of the present invention (high), showed that the water-resistance of the coated paper was evaluated as x. In Comparative Example 7, in which the content of the surfactant (B) component relative to the binder resin (A) was outside the range of the aqueous dispersion of the present invention (low), the water contact angle of the coated paper was low, and the oil-resistance of the coated paper was evaluated as △.

Example 8 and Comparative Example 4, and Example 9 and Comparative Example 5 confirmed that even when a styrene-acrylic emulsion or a water-based polyester resin was used as the binder resin (A), a film having excellent water-and oil-resistance can be obtained by using the surfactant (B) component in combination with the wax component (C).

Although the present invention has been described in detail with reference to particular embodiments, it will be apparent to those skilled in the art that various modifications may be made therein without departing from the spirit and scope of the present invention.

The present application is based on Japanese Patent Application No. 2022-048748 filed on March 24, 2022, which is incorporated herein by reference in their entirety.

### Industrial Applicability

The aqueous dispersion of the present invention is useful as a water- and oil-resistant coating agent or a heat-sealable coating agent, and is useful in various applications, such as additives for such products as foods, cosmetics, pharmaceuticals, and the like, as well as antifogging agents, antistatic agents, compatibilizers, paints, adhesives, dispersants for various organic and inorganic particles, and additives for thermoplastic resins and thermosetting resins.

## Claims

1. An aqueous dispersion comprising a binder resin (A), a nonionic surfactant (B), and a wax component (C),
wherein the content of the nonionic surfactant (B) is 0.1 to 200 parts by mass based on 100 parts by mass of the binder resin (A), and 2 parts by mass or more based on 100 parts by mass of the wax component (C).

2. The aqueous dispersion according to claim 1, wherein the nonionic surfactant (C) is at least one surfactant selected from polyol fatty acid esters, polyoxyethylene alkyl ethers, and polyoxyethylene alkylamines.

3. An aqueous dispersion comprising a binder resin (A), a surfactant (B'), and a wax component (C),
wherein the surfactant (B') comprises at least one of sucrose fatty acid esters and sorbitan fatty acid esters, and
the content of the surfactant (B') is 0.1 to 200 parts by mass based on 100 parts by mass of the binder resin (A), and 2 parts by mass or more based on 100 parts by mass of the wax component (C).

4. The aqueous dispersion according to any one of claims 1 to 3, further comprising an anionic surfactant (D).

5. The aqueous dispersion according to any one of claims 1 to 4, wherein the binder resin (A) is at least one radical polymerization resin selected from the group consisting of (meth)acrylic resin, styrene resin, vinyl resin, olefin resin, and copolymers containing monomers of these resins.

6. The aqueous dispersion according to any one of claims 1 to 5, further comprising pulp fibers.

7. The aqueous dispersion according to any one of claims 1 to 6, wherein the aqueous dispersion has a viscosity measured with a B-type viscometer at a temperature of 25°C and a shear rate of 100 rpm of 5,000 mPa·s or less.

8. The aqueous dispersion according to any one of claims 1 to 7, wherein the average emulsion particle size in the aqueous dispersion measured with a laser diffraction device at a temperature of 25°C is less than 100 um.

9. A water-resistant and oil-resistant coating agent comprising the aqueous dispersion according to any one of claims 1 to 8.

10. A coating agent for paper, plastic or fiber comprising the aqueous dispersion according to any one of claims 1 to 8.

11. A heat-sealable coating agent comprising the aqueous dispersion according to any one of claims 1 to 8.

12. A film comprising a binder resin (A), a nonionic surfactant (B), and a wax component (C),
wherein the content of the nonionic surfactant (B) is 0.1 to 200 parts by mass based on 100 parts by mass of the binder resin (A), and 2 parts by mass or more based on 100 parts by mass of the wax component (C).

13. A film comprising a binder resin (A), a surfactant (B'), and a wax component (C),
wherein the surfactant (B') comprises at least one of sucrose fatty acid esters and sorbitan fatty acid esters, and
the content of the surfactant (B') is 0.1 to 200 parts by mass based on 100 parts by mass of the binder resin (A), and 2 parts by mass or more based on 100 parts by mass of the wax component (C).

14. A film comprising a binder resin (A), a nonionic surfactant (B), and a wax component (C), wherein the film contains a phase (X) having birefringence in the film.

15. A film comprising a binder resin (A), a nonionic surfactant (B), and a wax component (C), wherein the surface of the film has a surface roughness Ra of 10 to 100 nm as measured by a scanning probe microscope method.

16. The film according to any one of claims 12 to 15, having a film thickness of 0.1 to 30 um.

17. The film according to any one of claims 12 to 16, wherein the film is a water-resistant and oil-resistant film.

18. The film according to any one of claims 12 to 17, wherein the film is a heat-seal film.

19. A packaging material having the film according to any one of claims 12 to 18.

20. A food packaging material having the film according to any one of claims 12 to 18.

21. A laminated body comprising a coating film formed on a surface of a substrate using the aqueous dispersion according to any one of claims 1 to 8.

22. A laminated body comprising a substrate and the film according to any one of claims 12 to 18.

23. The laminated body according to claim 21 or 22, wherein the substrate is paper, plastic or fiber.
